(19) Europäisches Patentamt

European Patent Office

Office européen des brevets

(11) **EP 1 376 611 A2**

(12) **EUROPEAN PATENT APPLICATION**

(43) Date of publication:
**02.01.2004 Bulletin 2004/01**

(51) Int Cl.7: **G21B 1/00**

(21) Application number: **03077921.9**

(22) Date of filing: **22.03.1996**

(84) Designated Contracting States:
**AT BE CH DE DK ES FI FR GB GR IE IT LI LU MC NL PT SE**

(30) Priority: **06.06.1995 US 467298**
**06.03.1996 US 12922**

(62) Document number(s) of the earlier application(s) in accordance with Art. 76 EPC:
**96925244.4 / 0 914 668**

(71) Applicant: **Jouanneau, André**
**Bethesda, MD 20814 (US)**

(72) Inventor: **Jouanneau, André**
**Bethesda, MD 20814 (US)**

(74) Representative: **Findlay, Alice Rosemary**
**Lloyd Wise**
**Commonwealth House,**
**1-19 New Oxford Street**
**London WC1A 1LW (GB)**

Remarks:
This application was filed on 16 - 09 - 2003 as a divisional application to the application mentioned under INID code 62.

(54) **Method and apparatus for producing and using plasma**

(57) A method and apparatus for creating and using a stable plasma inside a solid by providing a solid material with a lattice containing cavities of a size that will allow the formation and retention of stable plasma therein and, causing particles to enter the lattice of the solid and become a stable plasma therein.

Figure 1

Printed by Jouve, 75001 PARIS (FR)

**Description**

FIELD OF THE INVENTION.

This invention is a breakthrough in the field of very high density plasmas and plasma solid fusion.

BACKGROUND OF THE INVENTION.

This invention presents a method and apparatus that allow the creation of stable condensed matter inside a solid, a very high density stable plasma, and some of its many uses, including plasma solid fusion. This plasma can be used to store a large quantity of chemical energy or to produce nuclear fusion.
Over the past decades, the scientific community has undertaken a massive effort to discover a source of plentiful, clean and inexpensive fuel. For a long time, scientists have known that water could be the source of such fuel. Water can be split into its constituents elements, hydrogen and oxygen, by electrolytic methods, thermochemical extraction processes and other methods. The combustion of Hydrogen with Oxygen is clean and energetic, and because of the abundance of water, constitutes an almost inexhaustible source of energy. To compensate for the fact that the combustion of hydrogen is less energetic than that of natural gas, scientists have unsuccessfully tried to increase by various means the density of hydrogen per unit of volume.
Hydrogen also represents another potential source of energy: Deuterium, which constitutes 0.015 % of the total hydrogen on the planet, is a potential fuel for nuclear fusion which is an ideal source of energy: in more than thirty years, a great deal of work has been conducted in the field of high temperature controlled plasma fusion to achieve this end. However, despite massive investment in expensive and complicated apparatus such as the Tokamak, the successful production of energy by high temperature plasma fusion does not appear to be any closer. In addition to the production of energy, these methods produce some particles (neutrons, gamma, helium,...).

SUMMARY OF THE PRESENT INVENTION.

The present invention is for a method and apparatus that allows the creation of a high density plasma of protons, deuterons or tritons. These three particles will be noted symbolically H D $T^+$ to simplify later notation. This plasma has a very high density ($10^{23}$ to $10^{24}$ particles/cm$^3$). By comparison, plasma gases created classically under magnetic confinement only reach densities of about $10^{14}$ particles/cm$^3$. Even though this plasma of H D $T^+$ is highly concentrated, it is stable and can be maintained for several hours without significant difficulty. The plasma itself is produced inside a solid material from a ionic solution, plasma gas or gas atmosphere. The plasma inside a solid, or a plasma solid, remains stable because of a triple resonance phenomenon inside specific materials, which prevents the association of positive particles and electrons. Plasma of such densities can serve many purposes: **The storage of hydrogen isotopes under plasma form** allow the storage of more hydrogen atoms per unit of volume than liquid hydrogen, and therefore has a greater potential chemical energy. If the H D $T^+$ are released from the solid under atomic (H) and molecular ($H_2$) form, they can be used as a source of chemical energy to fuel engines and turbines. If the protons or deuterons are released as charged particles ($H^+$, $D^+$), they can be accelerated and used to propel a rocket in space. Inside the metal, the plasma has a particular and unique structure which gives it stability, and allows certain H D $T^+$ to approach each other without electric repulsion, and then to fusion. The heat produced by these thermonuclear reactions can be used among others for domestic heating or to desalinize sea water (this could be a source of cheap, potable water, especially for dry countries which borders oceans), or to produce cheap electricity, etc... **Nuclear Physics applications** are also possible. Several different by-products can be obtained during the plasma-solid fusion: particles such as Neutrons, Gamma particles, Tritium, etc... If the plasma is pressurized sufficiently, interactions between the H D $T^+$ and the nuclei of metallic atoms become possible.

DESCRIPTIONS OF THE DRAWINGS:

Fig. 1 shows an electrolytic bath required for the loading of plasma solid.
Fig.2 represents the electrochemical mechanism of hydrogen inside the cathode.
Fig.3 represents a diagram of the potential in function of Log i.
Fig.4 illustrates the relationship between Log $i_0$ and the volume apparent $V_a$ for different metals.
Fig. 5a shows the potential in function of Log $i_0$ for the palladium in acid solution.
Fig. 5b represents the curve V = f(Log i) for Palladium, with new and ruptured palladium electrodes.
Fig. 6a shows an elementary energy cell inside the Palladium.

Fig. 6b is an elementary cell inside the Palladium.

Fig. 7a, 7b, and 7c represents different kind of pulsed currents.

Fig. 8 represents a top view of an interface metal-plasma gas.

Fig 9. represents a top view of an interface metal-hydrogen gas.

Fig. 10a represents a top view of an interface ionic solution-metal-plasma gas.

Fig. 10b represents a top view of another mixed interface ionic solution-metal-plasma gas.

Fig. 11 represents a top view of a mixed interface usable in a vehicle.

Fig. 12a represents a top view of a mixed interface usable to propel a rocket.

Fig. 12b is a cross section of a rocket propelled using plasma solid.

Fig. 13a depicts an elementary plasma cell with its plasma crown or nanotokamak.

Fig. 13b depicts the orbital surrounding the plasma crown inside an elementary plasma cell.

Fig. 14 depicts a cross section of an apparatus designed to discharge an energy wave inside a cathode loaded with plasma solid.

CONDITIONS REQUIRED TO CREATE A PLASMA OF HYDROGEN ISOTOPES INSIDE A SOLID.

The plasma can be created inside metallic materials from an ionic solution or a plasma gas. The H D T$^+$, submitted to an electrical field, penetrate inside the solid. In the case of an ionic solution, the method is electrochemical.

**A) Position of the Hydrogen Mechanism**

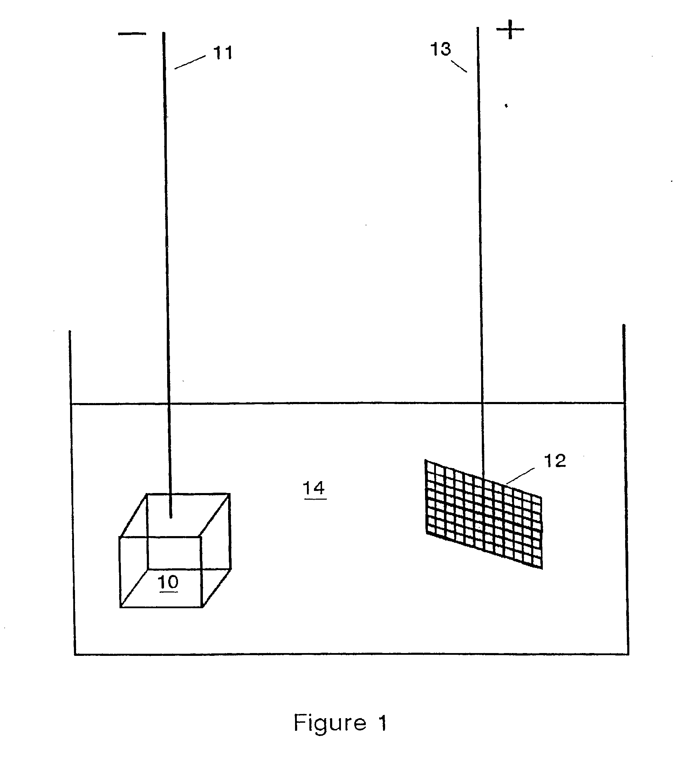

Figure 1 describes an electrolytic bath with a cathode (10) made up of palladium (or of other specific alloys), the negative pole (11) of a direct current source, an anode (12) made up of platinum and the positive pole (13) of the said source. The electrolyte (14) is an ionic solution with an acid or basic pH. Instead of using water ($H_2O$) for diluting the chemical product, heavy water such as $D_2O$ or $T_2O$ can be used. It has been well known for years that any metal, alloy or other electrical conductor, may function as the cathode of an electrolytic apparatus. It is also well known that such a cathode will attract positively charged particles, in the bath, such as H D T$^+$ and positively charged ions. It has generally been believed that the H D T$^+$ attracted to the cathode remained at the outer surface of the cathode to produce molecular hydrogen according to the electrochemical mechanism:

$$H^+ + e^- \longrightarrow H + 13.5 \text{ eV} \qquad \text{First electrochemical step}$$

$$H + H^+ + e^- \longrightarrow H_2 + 17.8 \text{ eV} \qquad \text{Second electrochemical step}$$

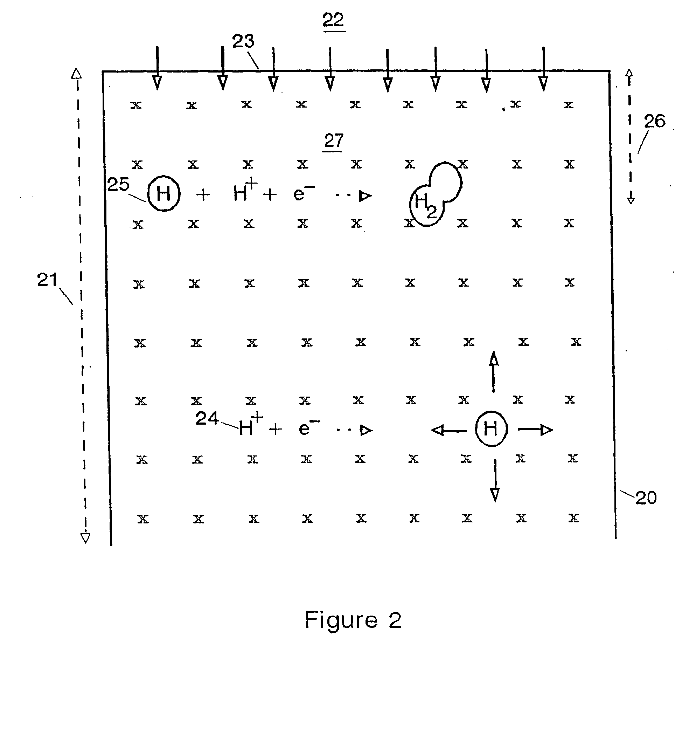

But the first step of the hydrogen mechanism is produced inside electrode 20 in layer 21, 3000 Å to 5000 Å thick, including the surface atoms (Figure 2). The size of the H D T$^+$ is $10^{-5}$ Å. Compared to the size of other ions (1 Å to several Å), and the interatomic distance at the surface of the metal (about 2 Å), the size of the H D T$^+$ is relatively small. This explains why H D T$^+$, if endowed with enough energy, can easily penetrate the metallic electrode. In solution 22, the H D T$^+$ are in perpetual movement, passing from a water molecule to another easily. As soon as a cathodic potential is applied to the electrode, the H D T$^+$ proceed to the surface of the metal. The first H D T$^+$ to come in contact with the metal steal one electron from each atom of the metallic surface of the electrode, react to become atomic hydrogen, and remain for a little while at the surface. During the second electrochemical step, they then react with another electron and another H D T$^+$ to become molecular hydrogen. The time interval t needed to conclude those two electrochemical steps is short, but much longer than the time interval needed by the other H D T$^+$ to penetrate inside the metal. , Because of the electric field generated, the free H D T$^+$ must react with electrons. However, since the metallic atoms of the surface are already occupied by hydrogen atoms, the free H D T$^+$ can not extract electrons from those surface atoms. They penetrate through the surface of the metal 23, and, as soon as they encounter a free reactional site in the 3000 Å to 5000 Å layer, they react 24. The thickness of layer 21 depends of the potential applied at the electrode, if the potential is not too cathodic. For very cathodic potentials, the thickness of the layer reaches a limit comprised between 3000 Å and 5000 Å, for which the nature of the metal has no great influence. This limit expresses the fact that the penetration of protons is impeded by the presence of numerous electrons in the metal. The nature of the metal exerts a very large influence on the second electrochemical step 25. For some metals, the second step occurs only at the surface of the electrode. The available space in the elementary cell inside the metal is thus not large enough to contain molecular hydrogen. For a specific category of metals (platinum, etc...), the second step occurs under the surface of the electrode in layer 3000 Å to 5000 Å thick. This layer is the same as the one where the first step occurs. The layers 26 for other metals are comprised between the results for the two previous categories of metal (0 to 5000 Å). In each elementary cell 27 of the layer where molecular hydrogen is produced, the electrochemical mechanism produces an energy of 31.3 eV. The energy is used to place the metallic atoms of the layer in a state of vibration, disperse the H D T$^+$ inside the layer and help them find the reactional sites available for reaction, disperse atomic hydrogen in the layer and inside the metal, and push the molecular hydrogen outside the electrode after the reaction. The molecular hydrogen can not penetrate the core of the electrode because it is static: this part of the electrode thus acts as a fence which prevents the diffusion of molecular hydrogen inward. This metallic layer 3000 Å to 5000 Å thick is an **active layer** which surrounds a passive metallic core. The metallic layer where molecular hydrogen is produced is **dynamic**, not static.

**B) First Resonance Phenomenon during the Electrochemical Mechanism of Hydrogen.**

The mechanism which produces hydrogen molecules by electrolysis is both an electrochemical and a physical phenomenon. The successive transformation of H D T$^+$ in atoms, then in molecules is only a step in a very complex process where numerous physical parameters intervene. One of the most important factors influencing this reaction appears to be the available volume of free metal lattice. The free volume between the atoms of the metal can be calculated for each atom by:

$$V_{free} = V_a - V_{real}$$

$V_a$ is the volume apparent of the atom

$$V_a = \frac{M}{P.\,N}$$

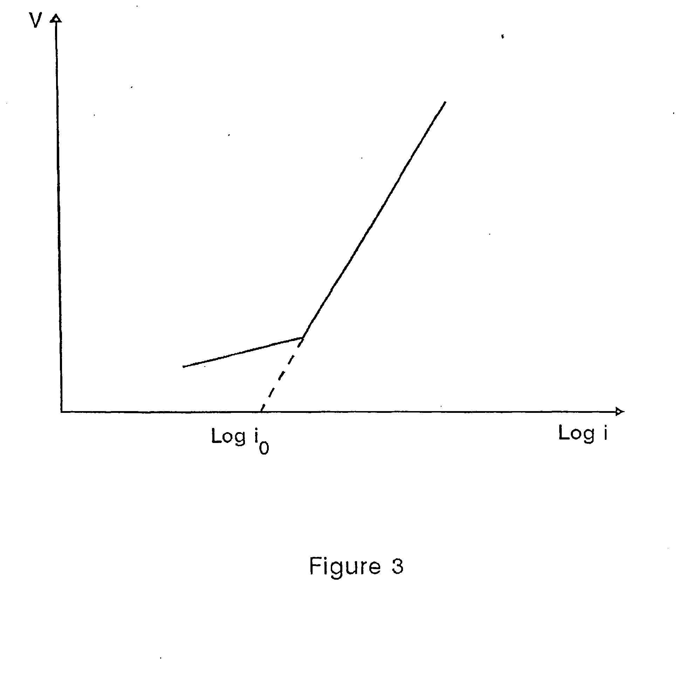

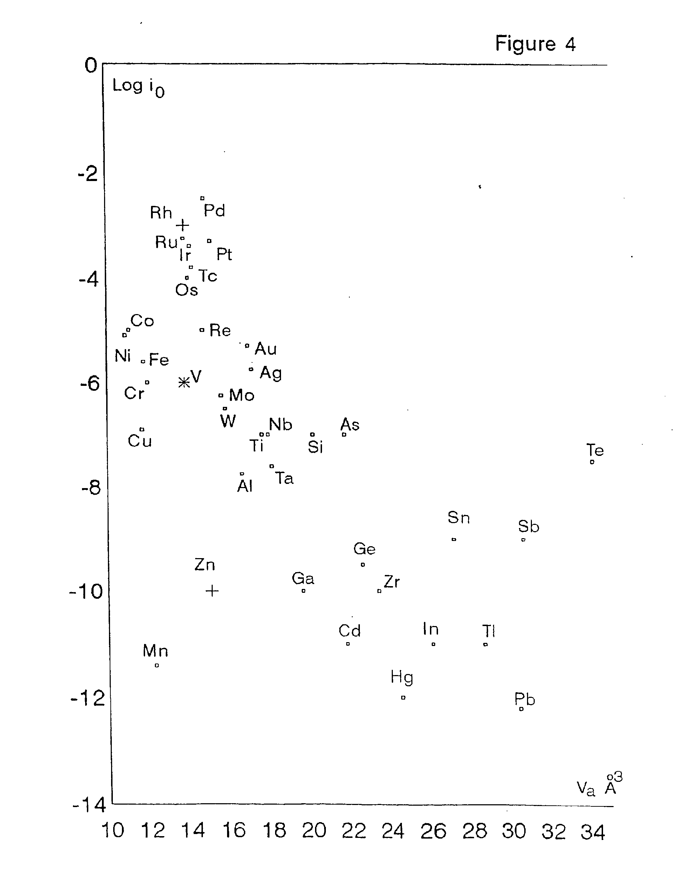

where M is the molar mass of the metal, P the volumic mass, N the Avogadro number, and $V_{real}$ is the real volume of the atom calculated as a sphere of radius R atomic. These calculations have showed that in fact the free volume $v_{free}$ is proportional to the volume apparent $V_a$ of the atoms, and represent about 25 to 29 % of the volume apparent. For this reason, $V_{free}$ and $V_a$ are equivalent. $V_a$ however becomes more interesting in the case where the metal is an alloy. This is why this parameter has been chosen to study the influence of the lattice of the cathode. Since Tafel, the relation between current-density I and potential (V) for the hydrogen mechanism is often written as: V = a -b Log i
where $i_0$, defined as the exchange current-density, equals the current at a potential equal to 0. In the literature, authors who have studied the hydrogen mechanism present their results under the form of curves V = f(log i) (Figure 3). The current-density is the sum of the current-densities exchanged in the two electrochemical steps. When the potential is not very cathodic, the current-density is almost entirely caused by the first step (first slope of the curve). When the potential becomes more negative however, the second step, slower than the first, controls the mechanism (second slope on the curve). The value of Log $i_0$ is obtained by reading the intersection of this second part of the curve with the axis of Log i. As seen previously the second electrochemical step occurs in a layer whose thickness is directly related to the nature of the metal. This value of Log $i_0$ is therefore a good descriptive parameter of the second electrochemical step and is therefore related to the depth of the layer. To show the influence of the lattice of the metal, Figure 4 presents the evolution of Log $i_0$ in function of the apparent atomic volume in acid solution for all the metals studied in the literature: Ag, Al, As, Au, Bi, Co, Cu, Cd, Cr, Fe, Ga, Ge, Hg, In, Ir, Mo, Mn, Nb, Ni, Pb, Pd, Pt, Re, Rh, Ru, Sb, Si, Sm, Ta, Tc, Te, Ti, Tl, V, W, Zn, Zr.
Despite dispersion for some metals, the curve shows a general tendency: when the atomic volumes increase, the value of Log $i_0$ increases and passes by a maximum. Its value for great atomic volumes is very low. The maximum of the curve is obtained for ruthenium, iridium, osmium, technetium, palladium and platinum ($V_a$ comprised between 13.8 Å$^3$ and 15.2 Å$^3$). The curve, however, presents numerous anomalies for metals such as copper, vanadium, manganese, and zinc. These results, apparently abnormal, are very interesting because they show that other factors intervene and allow to understand the hydrogen mechanism more completely. Two other parameters are important: the hardness of the metal and its affinity toward hydrogen. For a given atomic volume $V_a$, the hardness and Log $i_0$ are inversely proportional. The metals which have a strong affinity for hydrogen, Zn H$_2$, VH$_{0.71}$, NbH$_{0.86}$, TaH$_{0.76}$, TiH$_2$, Zr H$_2$, all have the lowest Log $i_0$ of the set for their atomic apparent volume $V_a$. These metals' affinity for hydrogen modifies the structure of the metal and impedes the electrochemical mechanism of hydrogen. production. Figure 4 presents the first resonance phenomenon during the hydrogen mechanism: For the metals of atomic volumes V < 13.8 Å$^3$, (Ni, Co, Fe, Cr, Cu, Mn), the free available atomic volume $V_{free}$ (the free volume of the elementary cell) is too small within the metal. The reaction is possible only near the surface of the electrode where the metallic atoms can move more easily. The vibrations of the metal provoked by the energy generated by the first elementary step allows the creation of the elementary cells necessary for the second steps. For the metals whose atomic volume is comprised between 13.8 $Å^3$ and 15.3 $Å^3$, Rh, Ru, Os, Ir, Tc, Pd, Pt, Re, the free atomic volume $V_{free}$ of the elementary cell is large enough for the formation of an hydrogen molecule. The two atoms H of hydrogen are created and trapped in an elementary cell whose size is only slightly greater than the size of an hydrogen molecule. The distance between the two atoms H is close to 1.2 Å, the distance of Van der Waals below which two atoms of hydrogen are forced to form a molecule of hydrogen. The energy produced by the two steps (31.3 eV) forces the two hydrogen atoms to become a hydrogen molecule. The free volume inside the elementary cell has a size of about 4 $Å^3$ and acts as a resonant cavity for the hydrogen molecules. For the metals of atomic volumes V > 15.3 $Å^3$, the free volume of the elementary cell is much larger than the volume of the hydrogen molecule. In these elementary cells, two hydrogen atoms have enough space not to interact. As the atomic volume increases. the second step becomes more difficult to realize since the large elementary cell cannot force the two hydrogen atoms to form an hydrogen molecule. When $V_a$ increases, the value of Log $i_0$ decreases. A careful examination of Figure 4 allows to determine the factors which control the optimization of the hydrogen mechanism: an atomic apparent volume $V_a$ comprised between 13.8 $Å^3$ and 16.4 $Å^3$, the lowest possible hardness, and no affinity of the metal toward hydrogen (except palladium).

Knowing these factors allows to create different alloys (average apparent atomic volume comprised between 13.8 $Å^3$ and 16.4 $Å^3$) for whom the mechanism would be greatly enhanced. The metals without any affinity toward hydrogen can be divided into two groups: ( $V_a$ < 15 $Å^3$, Co, Cu, Cr, Ni, Fe, Os, Ir, Ru, Rh,...) and ( $V_a$ < 15 $Å^3$, Pt, Au, Ag, Mo, W, Al , ... ) . Combinations of metals from these two groups which produce an average apparent atomic volume comprised between 13.8 $Å^3$ and 16 $Å^3$ allows the reproduction of the first resonance phenomenon by creating a free volume inside the cell of about 4 $Å^3$. Some of these alloys are: Cu Ag, Co $Au_2$, Ni $Ag_2$, Fe $Al_2$, Ni $Al_3$, Ni $Au_2$, Ni $Al_2$,...), but many other combinations are possible.

## C) Second Resonance Phenomenon: Creation of Plasma Solid.

Normally, because of the affinity of the Palladium toward hydrogen, its Log$i_0$ should have a lower value, as those of Vanadium, titanium, niobium, tantalum... The result appears to be incorrect. However, the behavior of palladium is different because its Log $i_0$ is close to the resonance's maximum (Figure 4). The palladium used as a cathode, at room temperature absorbs hydrogen to form a beta phase where the ratio of hydrogen to palladium is equal to about 0.66. In acid solution, the behavior of the palladium cathode is very peculiar, as shown by the experiment of Clamroth and Knorr [1], and Schuldiner and Hoare [2]. These experiments are summarized on curves 5a and 5b, and present the potential V of the palladium in function of Log i. Figure 5a shows curves representing the pH range 0.4 - 1.8. These curves are divided into three regions. The first region, at the lowest current-densities, shows a linear relationship between current-density and potential. The middle region shows a linear relationship between V and Log i with Tafel b slopes progressing from 30mV to 42mV at pH = 0.84. The third region, at the highest current-densities, also shows a linear relationship between V and Log i , but with a b slope of about 120mV. The more acid solutions are also divided into three ranges -- the first two sections being essentially the same as the pH 0.84 curve of Figure 5a. However, the third section, at the highest current-densities, flattens out and, in this range, V is virtually independent of current-density. Clamroth and Knorr claimed that this limited value of overvoltage remained constant for values as high as 80 Ampere/$cm^2$. Parameter b is equal to 0. Since bubbles of molecular hydrogen are formed on the surface of the electrode, current-density should depend of potential V. In reality, it does not. As the electrochemical mechanism of hydrogen production progresses, the slope b should have a value of 40 mV. In these experimental conditions, the electrochemical steps is composed of two first electrochemical steps:

$$H^+ + e^- \quad -> \quad H$$

$$+\} -> H_2 \qquad Slope\ b = 40\ mV$$

$$H^+ + e- \quad -> \quad H$$

Since it is impossible to produce hydrogen molecules with a slope (b = 0), a new phenomenon must be masking the electrochemical mechanism. The palladium electrode behaves as if it were a superconductor. The metal, however, can not transmit both elementary charges (electrons and protons): the protons, being much heavier than electrons ($m_{protons}$ = 1836 $m_{electrons}$), are considerably more difficult to displace and are therefore much slower. The electrons can move inside the metal with a speed measured in m.s$^{-1}$, while protons can only achieve speeds measured in mm.s$^{-1}$. If protons could move as easily as electrons inside the metal, they could find a free reactional site in which to react with the electrons, and slope b would therefore be equal to 40 mV. Since their transmission speed are different, protons and electrons thus remain inside the electrode, without reacting, under plasma form. The total current-density consists of two parts: the first part consists of the two first electrochemical steps, with a slope b = 40 mV, the second part $H^+ + e^- ->$ Plasma Slope b = 0 mV

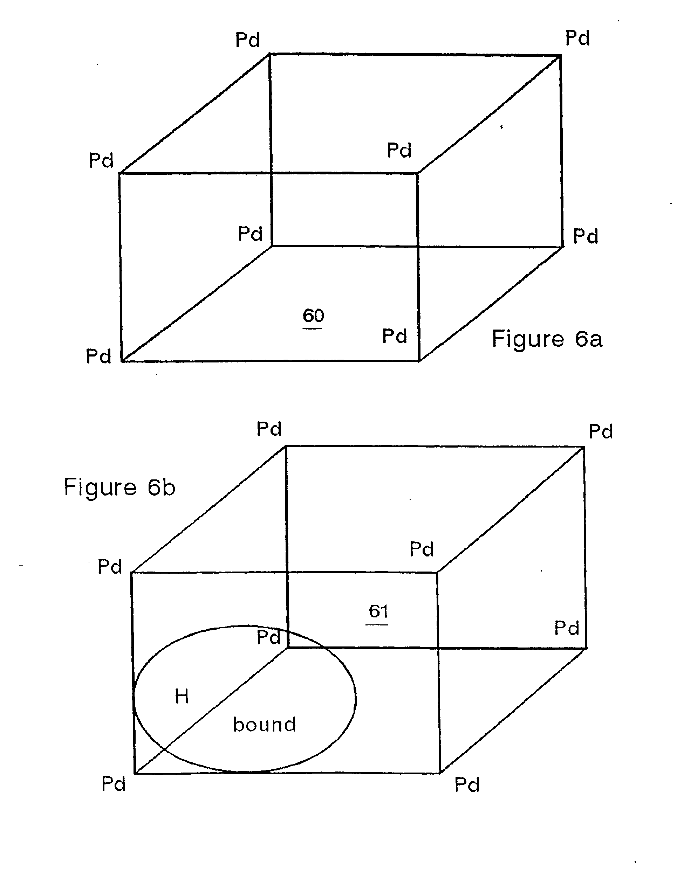

When the second part of the reaction becomes more important than the first, slope. b is equal to 0. This new phenomenon masks the effect of the electrochemical mechanism (first part), for large current-densities and pH < 1. The palladium stores the plasma, whose concentration increases with time. The structure of palladium explains the formation of plasma. The palladium cathode is made of $PdH_{0.66}$. Two thirds of the palladium atoms are bound with one hydrogen atom. The remaining third are completely free to react. Therefore, there are two categories of elementary cells (presented in Figure 6). To simplify the drawing, the cell is represented as if the Palladium were cubic in shape. The first category 60 is that of the elementary energy cells. There is no hydrogen atom bound to a metallic atom inside this kind of elementary cell. The volume of the cell is completely available for the electrochemical mechanism:

$$2\,H^+ + 2\,e^- -> H_2 + 31.3\ eV$$

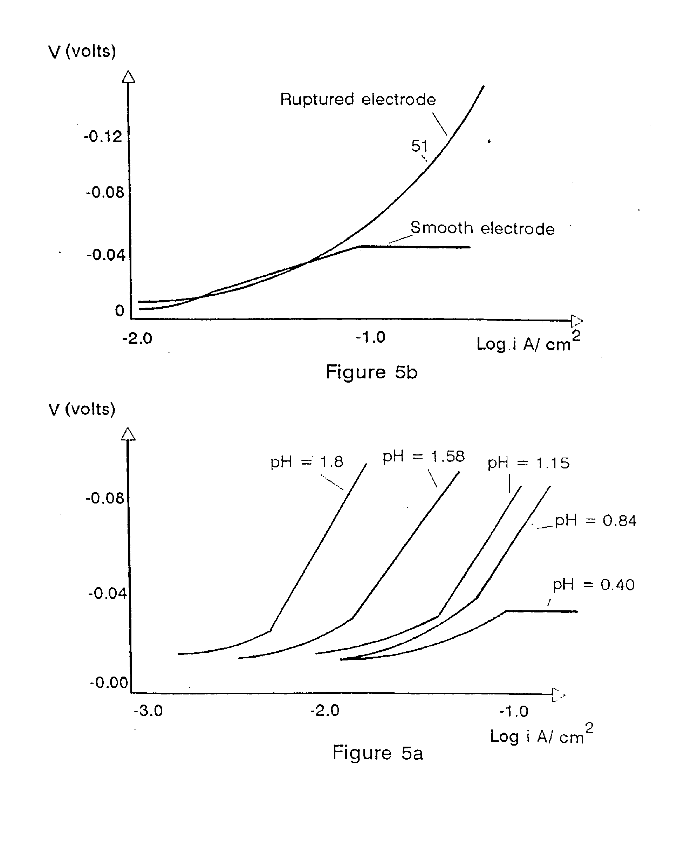

An energy of 31.3 eV is produced with each hydrogen molecule. The energy only appears in this kind of elementary cell, hence the name elementary energy cell. The energy created inside the electrode is transmitted to the protons that are dispersed in all directions inside the electrode, the hydrogen molecules in the form of kinetic energy which helps them depart the electrode and the palladium atoms, which receive the energy by impulse. The second category 61 is that of the elementary plasma cell. These cells have one hydrogen atom bound inside. They represent two thirds of all existing elementary cells. In these cells, the volume available is approximately equal to the volume of an hydrogen atom. It is thus impossible to realize the second electrochemical step inside those cells because there are too many protons inside the elementary cell and because the palladium atoms are always in a state of vibration caused by the elementary energy cells. The cells are always experiencing a rapid movement of compression-expansion. The vibrations thus forbid the combination of the H D $T^+$ and of the electrons inside the cell. The particles must remain under their plasma form. The elementary plasma cell has a free available volume of about 2 $Å^3$ which acts as a resonant cavity for the hydrogen atom. This is the second resonance phenomenon. However, with extensive cathodic polarization or low pH solutions , deep pits, cracks and blisters appear on the electrode. Hoare and Schuldiner [2] show on Figure 5b that the electrodes 51 that underwent such a treatment lose their property to produce b= 0. These cracked and pitted electrodes can not be used to create plasma inside the layer. The true cause of these microcracks, deep pits and blisters is that the electrochemical reaction is produced inside the electrode. The impulses that occur every time an hydrogen molecule is created produce vibrations inside the metal. If the vibrations are disorderly and anarchic, they cancel each other. But with time, the impulses become more or less synchronized. The effect of the impulses and of the vibrations is cumulative. Some forced oscillations appear if the frequency of the oscillations is close to one of the frequency of the electrode; the amplitude of the vibrations then increases. The compressions and extensions of the elementary cells increases to large degrees, and the metal fatigue produced by these large amplitude variations creates cracks in the metal. For lower pH, a dislocation force caused by the pressure created by the large plasma concentration also exists. When there are many cracks on the surface, the vibrations can only propagate in some small parts of this surface. The cumulative effect of the vibrations and the plasma inside disappear. Understanding this second resonance phenomenon allows to create alloys that duplicate this property. The alloys must possess a resonant cavity or free available volume inside the elementary cell comprised between 1.75 $Å^3$ and 2.5 $Å^3$. The cavity has the size and shape to accommodate only one hydrogen atom. But because of the vibrations of the metal and the excess H D $T^+$ in the cavity, the H D $T^+$ and electrons inside the free volume remain under the form of plasma. It is possible to build this particular cavity inside alloys by several means: The first mean is to duplicate the structure of Palladium. The alloys must present the first resonance phenomenon property and produce the hydrogen molecule already described (available free volume in the elementary cell comprised between 3.75 $Å^3$ and 4.5 $Å^3$). One of the metal composing the alloy must present an affinity toward hydrogen. The alloys must be a combination of:

- elementary cells free of hydrogen and available for the hydrogen electrochemical mechanism. These elementary cells have the size required by the resonance (14.9 $Å^3$) and a free internal volume of about 4 $Å^3$, allow the production of hydrogen molecules and of an energy of 31.3eV by elementary reaction which involves the vibrations of the plasma and of the metallic atoms. I name these elementary cells the "energy cells."
- elementary cells with one hydrogen atom bound to one metallic atom. The remnant of the volume of the elementary cell is about 2 $Å^3$. The shape of this free volume is adequate to contain one hydrogen atom. Through the mechanical vibrations of the metal, this remaining cells act as a resonator for the proton, and prevents it from reacting with an electron. We can name these elementary cells "plasma cells" since they allow the obtention of a high density of plasma in a small volume. The ratio between the two kinds of cells will depend on the applications and the experiments performed. The metals necessary to create the alloys can be divided in categories according to their affinity to hydrogen and their apparent atomic volume $V_a$:

| $V_a$ Å³ | $V_a$ <14 Å³ | 14 Å³ < $V_a$ <15.3 Å³ | $V_a$ >15.3 Å³ |
|---|---|---|---|
| Metal I No affinity | Ni, Cu, Cr, Fe, Co... | Os, Ru, Rh, Ir, Tc Re, Pt, Mo, W,... | Au, Ag, Al,... |
| Metal II Affinity | V,... | Zn, Pd,... | Nb, Ta, Ti, Zr, Sn,... |

It is possible to reconstitute the structure of Palladium by combining two, three or more metals from the different categories. The different alloys allow to vary the percentage of energy and plasma cells, the hardness, the size and shape of the resonant cavity required by the second resonance phenomenon. Some alloy combinations are given here: Zn Ni Al₂, Zn Co Al₂, Zn Ni Al Nb, Zn Ni Al Ta, Zn Cu Pd Ag, Zn Ni Pt Ag, Ti Ag Cu₂, Ni₃Sn, Co₃ Sn, Nb Ni, Nb Co, Nb Cu, V₂ Ni Nb, Zr Cu₃, Zr Fe₃, etc... It is possible to create many more alloys that would conform to the second resonance phenomenon criteria. The second manner to duplicate the properties of Palladium is to use a metal or alloy with an average apparent atomic volume comprised between 20 and 22.5 Å³. In function of the crystallographic structure of the metal or alloy, the free available volume vary between 5 and 6 Å³ or 5.62 and 6.75 Å³. If it is possible to bond two hydrogen atoms inside each elementary cell, the remnant of the free volume will be close to 2 Å³, and will have just the size and shape necessary to contain one hydrogen atom. This volume acts as a new resonant cavity during the second resonance phenomenon and allows the formation of plasma. These alloys must be composed of large atoms. Some of these alloys and metals are: Zr, As, Sn Al, Sb Al, Zr Al, Cd As, etc...

A third method to create a resonant cavity of 2 Å³ is to bond three hydrogen atoms in an available free volume of about four hydrogen atoms (8 Å³). The average apparent atomic volume $V_a$ of such an alloy or metal should be around 30 Å³. Some of these metals or alloys are: Sb, Pb Sb, Te Pb Sn, etc...

A fourth method to duplicate the properties of Palladium is to use very small atoms without hydrogen bonded inside the elementary cell. Among the very small atoms, Beryllium and Boron have an affinity toward hydrogen. The smaller atoms with electrical conductivity and without affinity toward hydrogen are: Carbon ($V_a$ = 8.8 Å³), Nickel ($V_a$ = 11 Å³) and Cobalt ($V_a$ = 11.1 Å³). Carbon and the alloys Ni C and Co C can form a free volume for near resonant cavity, about 2 Å³.

## D) Third Resonance Phenomenon

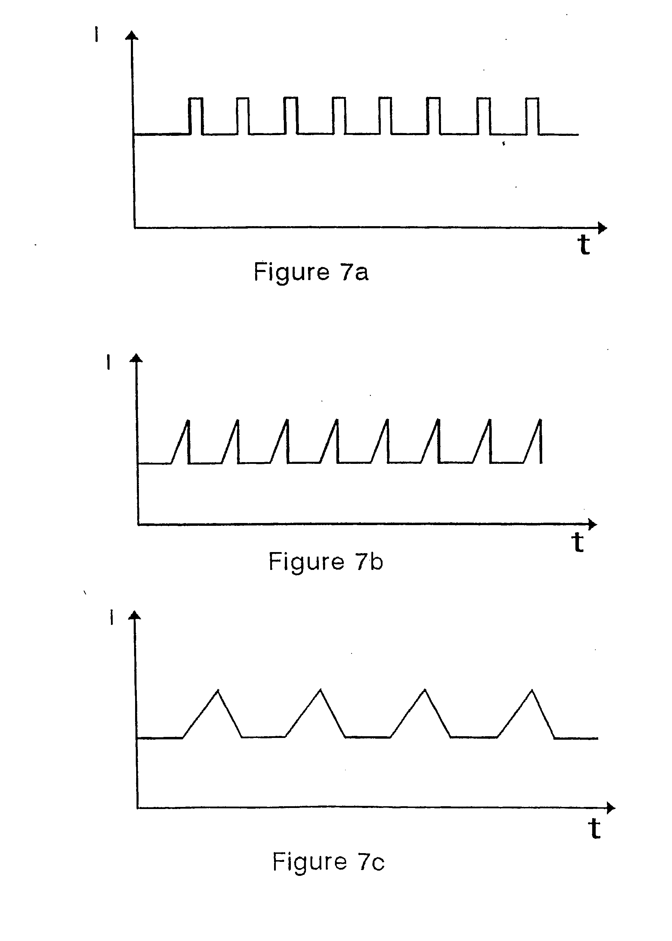

During the electrolysis, the hydrogen atoms created in the layer under the surface can migrate in all directions. Progressively, it is possible to saturate the inside of the palladium ,electrode from PdH₀.₆₆ to PdH with basic or acid solutions. Once the saturation is obtained (one hydrogen atom per palladium atom), the entire core of the electrode is converted into plasma cells. The free volume available per palladium atom is equal to the volume of one hydrogen atom. The electrode thus becomes a layer of energy and plasma cell surrounding a core composed uniquely of plasma cells. The "plasma cells" of the cathode are of two kind. The "plasma cells" of the layer are in a state of vibration and can store plasma. Those "plasma cells" are active. The core of the electrode is static. The "plasma cells" in this region can not store plasma. These "plasma cells" are passive. As seen previously in Figure 4, for a given atomic volume $V_a$, the Log $i_0$ parameter diminishes when the hardness of the metal increases. This means that the movement of the metallic atoms is very important for the electrochemical mechanism. The larger the movement of the atoms are, the thicker the active layer will be. Every time two protons meet two electrons in an energy cell, an energy of 31.3 eV is produced. The creation of this elementary energy, as well as the vibrations it produces, is chaotic. By using an acid solution, it is possible to organize the mechanism to a certain extent. In this solution, two first step of the electrochemical mechanism occur at the same time to produce an hydrogen molecule and an elementary energy of 31.3 eV. However, the energy production inside the layer is still chaotic. To improve the mechanism, it becomes necessary to synchronize both the energy production and the vibrations of the metallic atoms. If the vibrations are erratic or random, the cumulative effects of the vibrations are small. However, if the elementary impulses of energy are coordinated, the progressive accumulation of energy increases the amplitude of the vibrations and the degree of compression inside the electrode. Each metallic electrode has a set of resonance frequencies which depend of the shape of the electrode, of the nature of the metal, and of the freedom (or lack thereof) of its extremities. If the electrode is solicited through one of these frequencies, stationary waves are established throughout the electrode, with nodes and antinodes of vibration. Thus, by using a constant current-density to which are added periodical impulses (Figure 7), it becomes possible to force the periodic entry of similar protonic waves. These waves of H D T⁺ push periodically the H D T⁺ which are already inside the electrode and compress them against each other. The periodic repetition of these impulses coordinate the vibrations of the metal. It is possible to vary the characteristics of the pulse in function of the experiments or applications performed (the shape, the amplitude, the frequency). The frequency of the impulse must be adjusted for each cathode to one of the mechanical resonance frequencies of the electrode. It is also possible to solicit the electrode through one of its resonance frequencies by mechanical means (mechanical waves). These waves can be communicated to the electrode through the liquid solution, through the wire which conducts the current, or by using a magnetic transducer, etc... The frequency of the mechanical vibration can be audible or ultrasound, but must correspond to the resonance frequency of the electrode. The use of the electrode's resonance has three very important consequences:

- The synchronization of energy formation inside the layer allows us to increase the amplitude of the vibrations of the metallic atoms. The amplitude of the vibrations can be adjusted in function of the application desired. - The use of the resonance phenomenon creates areas where the vibrations are at their maximum. These areas, where the stationary waves are at their maximum, occupy a large part of the total volume of the electrode. The protons submitted to the metallic vibrations are dispersed throughout the electrode, including the core composed of plasma cells. Because of the resonance phenomenon, certain regions of the core are zones where the vibrations are at their maximum: the plasma cells become active and can thereafter store the H D T$^+$ under their plasma form. It is therefore possible to obtain plasma-solid both in the active layer and in 50 % or more of the electrode (active regions of the core). The volume of the electrode that can be used is increased by a factor of about 1000.

## E) Structure of the Plasma Inside the Resonant Cavity

The distribution of the plasma inside the plasma cells is not homogeneous: each corner of the cell is occupied by a metallic nucleus which contains an average of fifty protons. The free volume (4 Å$^3$) inside the cell represents approximately 25 to 29 % of the total volume of the lattice (15 Å$^3$). In an "elementary plasma cell", half of this free volume is occupied by one hydrogen atom bonded to one of the metallic atoms. The rest of the free volume inside an elementary plasma cell is not subjected to the electric fields generated by the metallic atoms. The plasma produced inside the plasma cells is contained in the free volume (2 Å$^3$). When one H D T$^+$ enters this cavity, it can not associate with an electron because of the vibrations. As soon as another H D T$^+$ enters inside the cavity, the two H D T$^+$ repulse each other and keep the largest distance possible between themselves. The same goes for the electrons. When a H D T$^+$ attempts to leave the free volume, it is subjected to a repulsive force generated by the metallic atoms of the cell and is prevented to depart. The free volume inside the cell has the approximate shape of a sphere (radius 0.8 Å). However, inside the free volume, the plasma is not homogeneous. As other H D T$^+$ enter, they occupy a kind of spherical crown or ring located between two spheres of respective radii 0.75 Å and 0.8 Å. The volume of the crown is about 0.3 Å$^3$. But the thickness of this plasma crown increases when the concentration of plasma increases. Submitted to the vibrations generated by the metallic nuclei, the plasma is in constant movement inside the spherical crown. Inside the sphere, the H D T$^+$ move in one direction. The electrons move in the other direction to avoid the attraction between the two particles. The movements of the two opposite electrical charges in opposite directions are equivalent to the movements of two parallel electrical currents of similar electrical charge in the same direction. A "Pinch effect" thus appears between these moving charges which allows the plasma to be stabilized inside the spherical crown. If the electrons were moving in the same direction as the H D T$^+$, the magnetic field generated would be repulsive and the plasma would be unstable. Only the plasma crowns with H D T$^+$ and electrons moving in opposite directions are stable. The size of the spherical crown is not constant because the plasma is constantly submitted to the vibrations generated by the metallic atoms. If the vibrations imposed on the plasma are regular and symmetrical, the central symmetry of the plasma crown is preserved. Because the movement of the opposite electrical charges is equivalent to two electrical current moving in the same direction, the plasma crown behaves as a spherical toroid. Because of Ampere's law, the magnetic field B generated by the moving charges is equal to 0 outside the plasma crown. Because of the central symmetry, the H D T$^+$ and the electrons have the same center of electrical charge at the center of the spherical crown. Because the two centers of the electrical charges occupy the same position, the plasma does not emit any electrical field inside and outside the plasma crown. The structure of the plasma in this particular situation is similar to that found in a tokamak. The "elementary cells" behave as small tokamak or "nanotokamaks." By using stationary waves inside the cathode, we can maintain the vibrations in the same directions and therefore synchronize the solicitations exercised against the "nanotokamaks." If the shape of the cell is not cubic, the shape of the plasma crown can be ellipsoidal. Likewise, if the vibrations are not applied symmetrically, the shape of the plasma crown can be asymmetrical. However, in these cases, as in the case of the spherical plasma crown, the electric field is nil inside and outside the plasma crown because of the electrical neutrality of the plasma and Gauss' law. The magnetic field is also nil outside the plasma crown.

## F) Conditions Required to Retain and Release the Plasma Solid

The creation of plasma inside a solid material is contingent upon a triple resonance phenomenon particular to the structure of the solid. But the H D T$^+$ which form the plasma solid can enter under many different forms, such as atoms, molecules, or H D T$^+$, from many different media such as ionic solutions with H D T$^+$, plasma gas of H D T$^+$, or atmospheres of hydrogen atoms or molecules. If the particles are charged, moving the particles inside the solid will entail 1 using electrical means. If the particles are electrically neutral atoms or molecules, moving the particles inside the solid will entail manipulating the pressure of the gas.

### F-1) Interface Metal-Ionic Solution.

With an ionic solution as the source of H D T$^+$, the. method is a classical electrolysis. However, the different parts of the electrolysis cell must respect some conditions. The ionic solutions can have any pH value -- basic or acid. However, the time needed in a basic solution to produce the plasma inside the electrode is longer because the plasma only begins to appear when each elementary cell holds a hydrogen atom. If the oxygen is produced in the electrolysis cell, it becomes necessary to avoid the interaction of the oxygen produced with the cathode by separating anode and cathode with a porous membrane. The solution has to be in constant motion -- through magnetic agitation or with a pump -- in order to maintain similar properties at the surface of the cathode. To avoid contamination of the cathode, the solutions have to be very pure. If any impurities (organic molecules, ions, metallic ions, ...) pollute the solution, the metal will lose its surface characteristics. Likewise to avoid the contamination of the cathode with elements produced by the anodic dissolution, the anode has to be made of a noble or unimpeachable metal (platinum for example). The surface of the anode must be large enough to avoid limiting the current-density passing through the cathode. The metal of the cathode must be made of Palladium, or of an alloy which respect the specific conditions of the triple resonance phenomenon inside the elementary cell as previously set forth. The free volume inside the elementary cell must be smaller than 2.5 Å$^3$. For a free volume greater than 2.5 Å$^3$, an hydrogen atom will be created. Plasma will not be formed. The optimal 1 size for the creation of the plasma crown and the obtention of the greatest plasma concentration is about 2 Å$^3$. Because of the vibrations of the metal, it is also possible to create plasma crowns for free volumes smaller than 2 Å$^3$. But the quantity of plasma that can be created and stored diminishes as the free volume becomes smaller. For best results, the elementary cells inside the core of the cathode must all,be " elementary plasma cells" with a volume of about 2 Å$^3$. The layer several microns deep around the core may be composed of different components, or of the same material. But because of the electrochemical mechanism of hydrogen, as seen in the case of Palladium, the elementary cells inside this layer are divided between energy cells and plasma cells. The layer may be made of an alloy with a preset percentage of energy cells varying from 0 to 100% of the total number of cells in the layer. The " energy cells" inside the layer produce energy at the same frequency as the pulsed current, thus creating and maintaining stationary waves inside the cathode. Inserting more " energy cells" inside the layer will prevent the destruction of the " elementary plasma cells" if the plasma concentration becomes too large. The creation of alloys will also allow the choice of atoms with more protons in their nucleus: the greater the number of protons in the nucleus, the greater the compression effect at the center of the cell will be. The mechanical properties of the alloys created will also be superior to those of the pure metals: they are harder, and will therefore be able to resist better to the plasma pressure. This will allow us to create plasma of higher densities inside the electrode. The movements of the metallic atoms are more constrained, but this flaw can be compensated by the application of vibration to the electrode. The cathode can be of any shape, but for some applications it will be of great import. To avoid contamination of the cathode, the wire which transmits current to the electrode must be insulated from the solution. In the case of an ionic solution with pH > 1, the intensity of the current-density can be large. since only a small percentage of the current-density can be used to charge the electrode with atomic hydrogen. It can take several hours to increase the concentration from PdH$_{0.66}$ to PdH. For acid solutions of pH < 1, the creation of plasma is far easier. For these solutions, the current-density threshold necessary to begin plasma storage is comprised between 0.1 A.cm$^{-2}$ and 0.2 A.cm$^{-2}$. This threshold correspond to the energy necessary to initiate vibrations of sufficient amplitude to keep the H D T$^+$ under the form of plasma. To charge the electrode rapidly, it is possible to use current-densities comprised between 0.2 A.cm$^{-2}$ and 50 A.cm$^{-2}$. However, if the storage is performed too quickly, cracks will appear at the surface of the cathode, and it will lose its properties. If the current-density is pulsed (so as to provoke the resonance phenomenon inside the electrode), the electrode will be charged all the more easily. The stationary waves created by the vibrations displace the H D T$^+$ from the active layer to the core of the electrode. When the H D T$^+$ enter an area of the core where the plasma cells have been rendered active by the vibrations, they become plasma. The electrode is thus charged very quickly. When the storage has reached its maximum capacity (quantity of plasma that can be stored without incurring damage to the electrode), it becomes possible to decrease the current-density (near the threshold of 0.1 A.cm$^{-2}$) to levels where the plasma is contained continuously in the electrode. But the vibrations must be maintained continuously to keep the H D T$^+$ under the form of plasma. The amplitude of the vibrations is controllable by adjusting the amplitude of the current-density pulse or the amplitude of the sound (or ultrasound) used to generate the vibrations. The degree of compression of the plasma is directly related to the amplitude of the vibrations applied. The fixation of the cathode must be realized with great precision at the vibration nodes to establish the stationary waves consistently. The temperature of the electrode can have two effects: a high temperature allows the metal of the electrode to soften, and therefore increase the level of vibrations of the electrode and a high temperature of the electrode is necessarily accompanied by a high temperature of the ionic solution, since the solution is a carrier of the heat generated by the electrode. The high temperature increases the thermodynamic efficiency of the turbine. Since the solutions are aqueous, it is necessary to work with high pressures to obtain high temperature and keep the solutions in a liquid state.

### F-2) Interface Metal-Plasma Gas

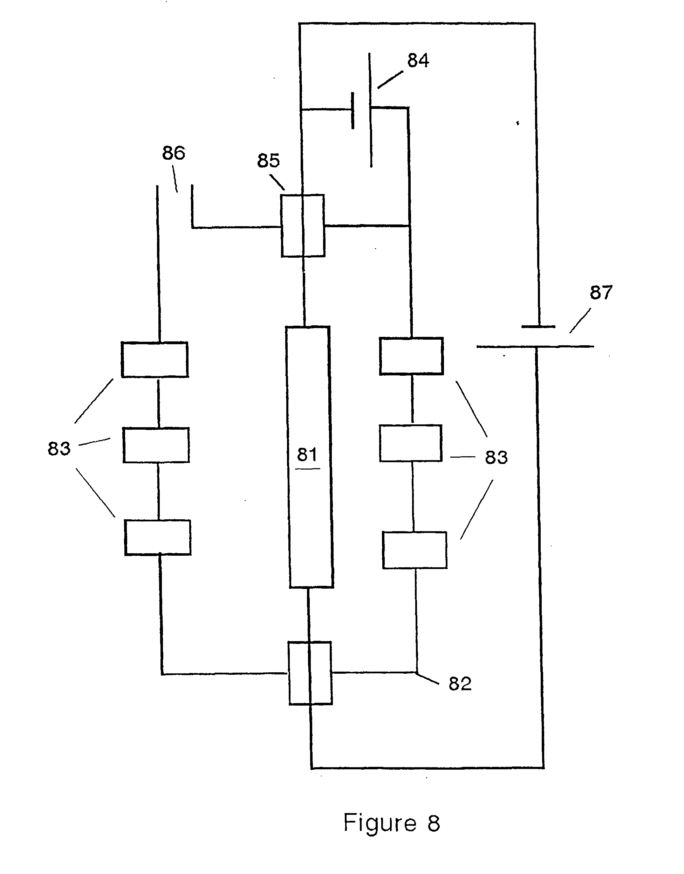

The plasma crown inside a solid can be created with H D T$^+$ coming from a plasma gas. The interface metal-plasma gas can be realized in an apparatus of the type described in Figure 8. -The cathode (81) composed of palladium (or alloy already described), concentric in shape (or other) is positioned at the center of the enclosure (82). The enclosure (82), a metallic or electrical conductor concentric in shape (or other), is used as anode. The plasma injectors (83) are distributed uniformly on the surface of the enclosure (82). The injectors are of the model found in the literature: they can be, for example, a molecular hydrogen stream subjected to electrical discharges (the discharges break the hydrogen molecule into H D T$^+$ and electrons). A power source (84) applies a potential difference between the cathode and the anode. This allow the attraction of the H D T$^+$ to the cathode. A non-conductor is placed in position (85) to avoid any contact between the wire leading to the cathode and the enclosure. A cavity, necessary to accommodate a vacuum pump (86), allows to remove the hydrogen molecules which have not been broken down by the electrical discharges and maintain vacuum inside the enclosure. Another power source (87) is connected to the cathode so as to adjust its temperature. The voltage applied between the anode and the cathode is adjustable and can be very high. It is much higher than the voltage used in the metal-ionic solution (about 2 V). Due to these large potentials, the H D T$^+$ arrive on the cathode with very high kinetic energies. The voltage is pulsed at the resonance frequency of the electrode, so as to create stationary waves inside the cathode. By manipulating the power source (87), it is possible to control the temperature of the cathode. An increase in temperature allows the metal to soften and facilitate an increase in the amplitude of the vibrations of the metallic atoms. In a plasma gas under magnetic confinement, the maximal particle concentration is $10^{14}$ particles.cm$^{-3}$. This concentration is the same as an ionic solution of pH =7. But since there is a potential difference between the cathode and the anode, there can be no stable plasma concentration between the two electrodes. However, the plasma flow from the injectors (83) should be considered as more important. The plasma flow from the injectors can be pulsed at the same frequency as the voltage so as to provoke vibrations inside the electrode. The vibrations of the electrode are as important as the case of an ionic solution. They allow the plasma created inside the active layer to disperse quickly in the core of the electrode and in the unused part of the layer, and allow the plasma crown to remain stable, for plasma storage or for other applications. The interface metal-plasma gas is also interesting for other reasons. Using this method will allow the use of cations which do not exist in ionic solutions. One of the most interesting of these cations is He$^{2+}$. Among the He$^{2+}$ ions, isotope three is the most interesting for thermonuclear fusion reaction.

### F-3) Interface Metal-Hydrogen Gas.

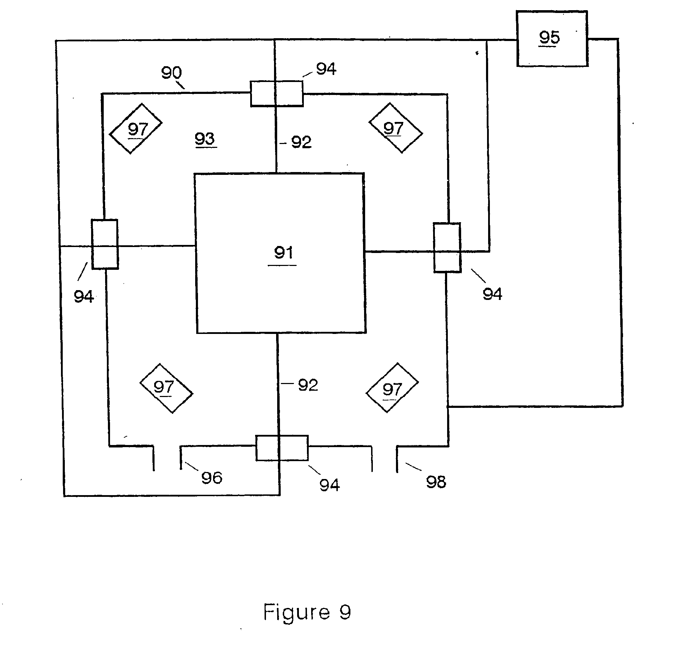

Figure 9 (top view) present another method to create H D T$^+$ plasma crowns inside a cathode 91 made of one of the specific alloy already described. The cathode is placed inside a metallic enclosure 90 containing an hydrogen atmosphere 93. The hydrogen pressure is maintained constant thanks to hole 96. Cathode 91 (a cube on Figure 9) is held through the center of its faces by the fixtures 92 which are electrical conductors. Insulator 94 prevents any electrical contact between enclosure 90 and the fixtures 92. A source of electrical power 95 maintains a potential between the cathode 91 and the enclosure 90. Generators 97 produce acoustic or ultrasonic energy which can be adjusted to one of the resonance frequency of the cathode 91. The vibrations can also be transmitted to the solid material using a magnetic transducer. Hole 98 allows the departure of the hydrogen stored under the form of plasma inside cathode 91. When the hydrogen molecules come into contact with cathode 91, they divide into hydrogen atoms and penetrate inside the cathode under the effect of hydrogen pressure. As the hydrogen atoms diffuse inside the metal and bond with one of the metallic atom of each cell, the elementary cells become plasma cells. When all the elementary cells are filled with one bonded hydrogen atom, the other hydrogen atoms, submitted to the vibrations of the metal, turn into plasma and progressively fill the plasma crowns. The release of the hydrogen can be accelerated by polarizing positively cathode 91 in comparison to enclosure 90 using electrical power source 95. This apparatus can also be used to create He$^{2+}$ plasma crowns in the metal or alloy with the proper resonant cavities from an helium atmosphere.

### F-4) Mixed Interface

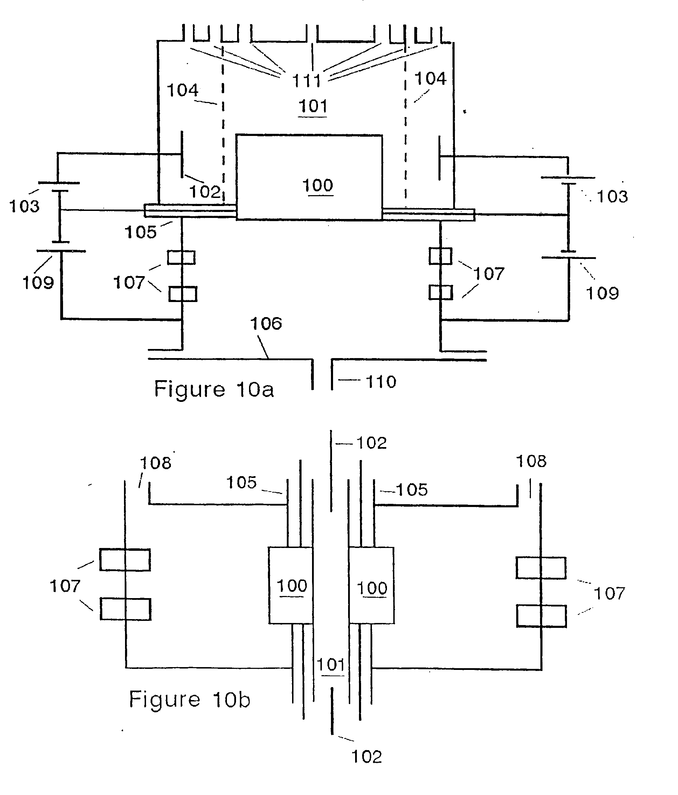

In the previous interfaces (metal-ionic solution, metal-plasma gas, metal-hydrogen gas), the mechanism works by first loading the plasma, then, in a second period, releasing it. The interest of a double interface, or mixed interface, is to separate the two functions so as to be able to use them both at the same time. Plasma loading can be conducted using an ionic solution in one compartment. It could occur continuously. The release of the plasma through the second compartment is conducted under the control of a power source. The second compartment can be filled with ionic solution, plasma gas, hydrogen gas or vacuum. Figure 10a describes a mixed interface (metal-plasma gas) -(metal-ionic solution).

The cathode is placed at the interface between the two compartments. The first compartment holds an ionic solution, the second a plasma gas. The cathode (100) is made of a metal or alloy already described. One side of the cathode is in contact with the ionic solution (101). The cathode can then be loaded with plasma through the surface in contact with the ionic solution. The other side of the cathode belongs to the second compartment.

The ionic solution is in constant movement. It enters and departs through the tubes 111 so as to maintain a constant pH at the surface of the cathode. The flow of the ionic solution also allows for the removal of the hydrogen molecules created by the cathode. The anode (102), made of a noble metal or of an alloy which cannot pollute the cathode, is separated from the cathode (100) by a porous membrane (104) to avoid the mixing of oxygen and hydrogen. A power source (103) maintains a current-density flow composed of two elements, a continuous current density and a pulsed current density, which allows the plasma loading of the cathode from H D T$^+$ in the ionic solution. Part 105 is a non-conductor through which the wire that establishes the electric contact between the cathode and the two power sources passes. The non-conductor (105) constitutes the separation between the two compartments. Part (105) also allows to maintain the two extremities of the cathode in a fixed position and determine with exactitude the characteristics of the stationary waves. Other fixtures at the nodes of vibration can be installed.

The second compartment is the same as the one described in the previous paragraph: enclosure as anode (106), plasma injector (107) cavity for vacuum pump (108), a power source (109). The function of the second compartment is variable with time and depends of the chosen application.

When the use of the plasma solid is not necessary, the power source (109) which produces pulsed current-density at the same frequency as in the first compartment, and the plasma flow created by the injectors are maintained at the lowest possible levels to avoid the departure of the plasma solid from the cathode. The potential delivered by power source (109) is adjusted to a sufficient value to prevent the plasma from leaving the cathode.

When it becomes necessary to use the plasma solid. the potential of the power source (109) allows to control the exit of the plasma through exit 110. At the same time, the injectors (107) are stopped. Another interesting use for this double interface could be the use of another configuration (Figure 10b): the ionic solution passes through the cathode while the different compartment retain their own function. The flow of ionic solution allows to control the temperature of the cathode and transfer the heat generated inside the cathode. The second compartment can be filled with vacuum or hydrogen gas.

### F-5) Plasma with particles other than H D T$^+$

This method can be generalized to elements other than hydrogen: Helium, Lithium, Beryllium, Boron....

The Helium particles small enough to enter the solid material are the He atom, the He$^+$ ion and the He$^{2+}$ ion in a plasma gas. The solid material in which a stable plasma of He$^{2+}$ particles can be created has two kinds of resonant cavities. The first kind, which have the approximate size of an He atom, allow to transform the He atoms in He$^+$ions. The other kind, which has the approximate size of an He$^+$ ion, allow to transform He$^+$ ions into He$^{2+}$ ions and create a plasma crown of He$^{2+}$. These cavities can contain a mix of He$^{2+}$, H D T$^+$ and electrons inside the plasma crown.

In the case of Lithium, usable particles are Li$^+$ ions from ionic solutions, plasma gases or molten salts. In the case of this element, the solid material must be composed of two kind of cavities: cavities of the size of an Li$^+$ ion, in which Li$^{2+}$ ions are formed thanks to the resonance phenomenon. and cavities of the size of the Li$^{2+}$ where the plasma crown of Li$^{3+}$ ions is created. These plasma crowns can also contain a mix of He$^{2+}$ Li$^{3+}$ and H D T$^+$ ions.

In the case of Beryllium, usable particles are Be$^{2+}$ ions from ionic solutions, plasma gases or molten salts. In the case of this element, the solid material must be composed of two kind of cavities: cavities of the size of an Be$^{2+}$ ion. in which Be$^{3+}$ ions are formed thanks to the resonance phenomenon. and cavities of the size of the Be$^{3+}$ where the plasma crown of Be$^{4+}$ ions is created. These plasma crowns can also contain a mix of Be$^{4+}$, He$^{2+}$, Li$^{3+}$ and H D T$^+$ ions.

In the case of Boron, usable particles are B$^{3+}$ ions in plasma gases. In the case of this element, the solid material must be composed of two kind of cavities: cavities of the size of an B$^{3+}$ ion, in which B$^{4+}$ ions are formed thanks to the resonance phenomenon, and cavities of the size of the B$^{4+}$ where the plasma crown of B$^{5+}$ ions is created. These plasma crowns can also contain a mix of B$^{5+}$, Be$^{4+}$, He$^{2+}$, Li$^{3+}$ and H D T$^+$ ions. These different plasma crowns can be used for plasma solid fusion.

### F-6) Release of the Plasma

The plasma constitutes a storage of matter, a storage of electrical charges, and a storage of energy. By varying the potential applied to the cathode, the H D T$^+$ appear under the form of charged particles or of molecules, depending on the nature of the compartment in which the release occurs.

**UTILIZATION OF THE PLASMA SOLID**

The plasma solid contained in specially designed materials and submitted to controlled vibrations can be used in different ways, depending of the amplitude of the vibrations applied to the cathode. If the amplitude of the vibration only reaches the limit needed to prevent the reaction of H D T$^+$ and electrons, the cathode can be used to store energy or matter. For this application, the vibrations can be pulsed at a different frequency than the resonant frequency of the solid material. The rate of standing waves inside the solid is not 100%. This rate increases the volume of the solid material affected by vibrations, so that a maximum volume of the solid material can be used to create and store plasma. If the amplitude of the vibrations is larger. the H D T$^+$ will interact together and provoke a thermonuclear fusion or a plasma solid fusion. If the amplitude is still greater, the interaction will extend beyond the interaction of plasma particles to the interaction of the H D T$^+$ with nuclei of the metallic atoms.

**G) Storage of Energy, Electrical Charges, and Matter.**

As seen previously, the plasma composed of H D T$^+$ and electrons is located inside the "plasma cell," in a small part of the free volume (approximately 2 Å$^3$). The shape of the area where the plasma can be found is a complex volume, and changes constantly because of the vibrations of the metallic atoms. However, it can be simplified to a spherical crown, or the area located between two spheres of radii 0.75 and 0.8 Å. The probability is highest to find the plasma in the outer area of the spherical crown, on the sphere of radii 0.8 Å, in a volume of about 0.3 Å$^3$. The plasma is always non-static. The size of the spherical crown is not constant because the plasma is constantly submitted to the vibrations of the metallic atoms. The center of the negative electrical charges plasma is located at or near the center of the spherical crown. The same goes for the positive electrical charges generated by the H D T$^+$. Since the two centers of opposite electrical charges occupy the same position, the plasma does not emit any electric field outside the 0.3 Å$^3$ of the plasma crown (because of the symmetrical distribution of the electrical charges). If the vibrations imposed on the plasma are regular and symmetrical, the two centers of electric charges occupy a same position. In this case, both the metallic structure of the cathode and the plasma are stable. In these conditions, the plasma solid can be used for the storage of energy, electrical charges, or matter. The plasma crown can hold between one and fifteen H D T$^+$ or the equivalent of 10$^{23}$ to 10$^{24}$ particles per cubic centimeter of cathode.

**G-1 ) Storage of Energy**

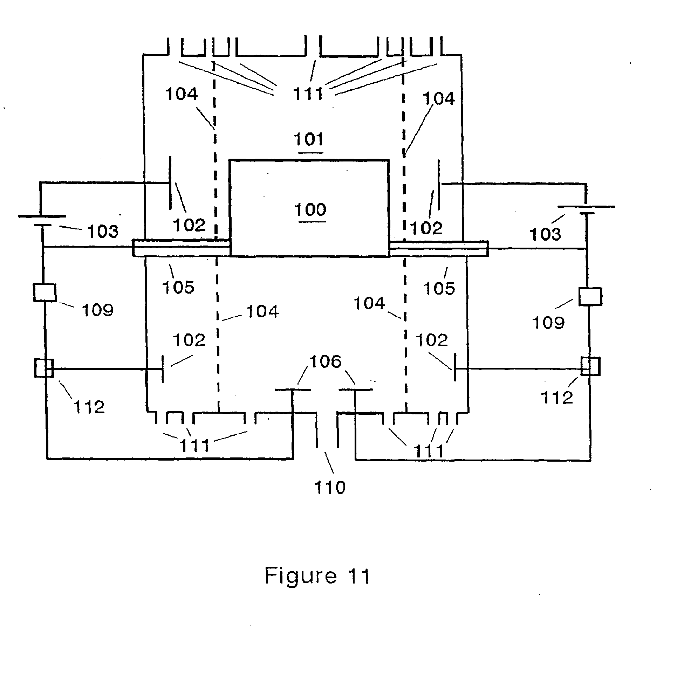

This high density plasma solid constitutes a storage of energy under two forms. The H D T$^+$ and electrons are kept separated inside the plasma. When the particles are allowed to associate after leaving the cathode, they produce molecular hydrogen and an energy of 31.3 eV per molecule of $H_2$, or an energy of 3 10$^3$ kilojoule/mole of $H_2$. The combustion of molecular hydrogen with oxygen produces an energy of approximately 250 kilojoule/mole of $H_2$. The total energy stored per mole of $H_2$ is about 3.25 10$^3$ kilojoule/mole of $H_2$. By comparison, gasoline produces about 5 10$^3$ kilojoule/mole or 35 10$^3$ kilojoule/dm$^3$ of gasoline, or in a tank of 60 cubic decimeter, about 2 10$^6$ kilojoule. To obtain the same reserve of energy under the form of plasma solid, it is necessary to store about 650 moles of $H_2$. Let us consider a concentration of 2 10$^{23}$ H$^+$.cm$^{-3}$ in the plasma cells, a concentration small enough that it will not destroy the cathode. Let us assume that we obtain an utilization rate of the cathode of 50% by using stationary waves. The concentration of plasma is therefore 10$^{23}$ H$^+$ per cubic centimeter of cathode. From a single cm$^3$ of cathode, 5 10$^{22}$ molecules of $H_2$ or 8 10$^{-2}$ mole of $H_2$ can be formed. The 650 moles of $H_2$ can be held inside eight cubic decimeter of cathode. This volume can be reduced by using a larger concentration of plasma and a greater rate of utilization of the cathode. The plasma solid allows to store a great amount of energy under a small volume, and therefore increase tremendously the autonomy of any man made vehicle. This energy could be used in a turbine which has a greater efficiency than an internal combustion engine. Figure 11a and 11b present a possible use of a plasma solid in a vehicle. The cathode containing the plasma solid must be included between two compartments (Figure 11). The first compartment is the same as the one described in Figure 10 a. It contains the same parts:
Cathode (100), ionic solution (101), anode (102), power source (103), porous membrane (104), non conductor (105) to separate the two compartments with an electrical wire passing through to establish a contact between the electrode and the power source. Tubes (111) are used for the circulation of the ionic solution. The functions of the first compartments are the loading of plasma overnight and, thanks to power source (103), the continuous creation of a state of vibration that maintains the plasma within the cathode. The second compartment has two functions:

- the first function of this compartment is to prevent the escape of plasma from cathode (100) when there is no need for molecular hydrogen. To accomplish this function, the second compartment is filled with an ionic solution. The polarities of electrodes (100) and (102) are the same as the one described for the first function. The difference in potential allows us to load more protons inside cathode (100) through the surface of the second compartment, and maintain or increase the concentration of plasma already inside.

- the second principal function of the second compartment is to allow the departure of plasma. At first, the ionic. solution is completely emptied from the second compartment through tubes (111) which are closed once the operation is completed. Only tube (110) remains open. Switch (112) disconnect the anode (102) and connects electrode (106) to the power source (109). This power source provides a negative potential to electrode (106) when compared to electrode (100). Because of the difference in potential, the H D T$^+$ can leave electrode (100), then react with electrons at the surface of electrode (106) to become molecular hydrogen. Some hydrogen molecules may leave electrode (106) with negative charges which are neutralized by H D T$^+$ coming from the opposite direction. The second compartment then fills with H$_2$. The reaction energy appears simultaneously (2H$^+$ + e$^-$ -> H$_2$ + 31.3 eV). The pressure of molecular hydrogen increases and a flow of hydrogen leaves the second compartment through tube (110). This hydrogen can then be burned in a turbine, which is more efficient than the internal combustion engine. An alternator coupled with the turbine produces the electricity required to supply the electric motors of cars or trains. In the case of an airplane, the flow of hydrogen can directly supply a turbojet. Thus, such a double compartment is interesting because it allow us to separate loading and deloading between the first and the second compartment, and control, thanks to the applied potential difference, the flow of molecular hydrogen. The use of plasma solid will have many beneficial consequences, especially for the environment.

**Remark**: For these kind of vehicles( car, train, plane, etc...), the cathode filled with plasma solid can be reloaded overnight under a low voltage and a high intensity current. Another way to reload the cathodes would be to use standard cathodes. Once empty, the standard plasma solid cathodes can be exchanged at a plasma solid reloading station where standard plasma solid cathodes are loaded continuously. If reloading must be completed in a very short time, the standard plasma solid cathode can be reloaded almost instantaneously in special plasma solid reloading stations. In these special stations, the empty cathode is pressed forcefully against the surface of a considerably larger cathode filled with plasma solid. This larger cathode is loaded continuously. This process takes place inside an ionic solution.

The vibrations used on the two cathodes have the same frequency, one of the resonance frequencies common to both cathodes. Once the two cathodes are pressed together under the same resonance frequency, they behave as one. The plasma solid contained inside the large cathode moves easily inside the empty cathode. Since the large cathode used in the reloading station is much larger than the standard cathode, the plasma solid concentration inside the large cathode does not vary significantly. The standard cathode is thus loaded rapidly at the same concentration. After reloading, the standard cathode is transferred to the vehicle, while still inside the ionic solution and under the potential provided by the vehicle so as to avoid the escape of plasma from the cathode during the transfer. The quantity of plasma solid transferred can be measured simply by weighing the mass of the cathode before and after the loading.

### G-2) Storage of Matter and Charged Particles

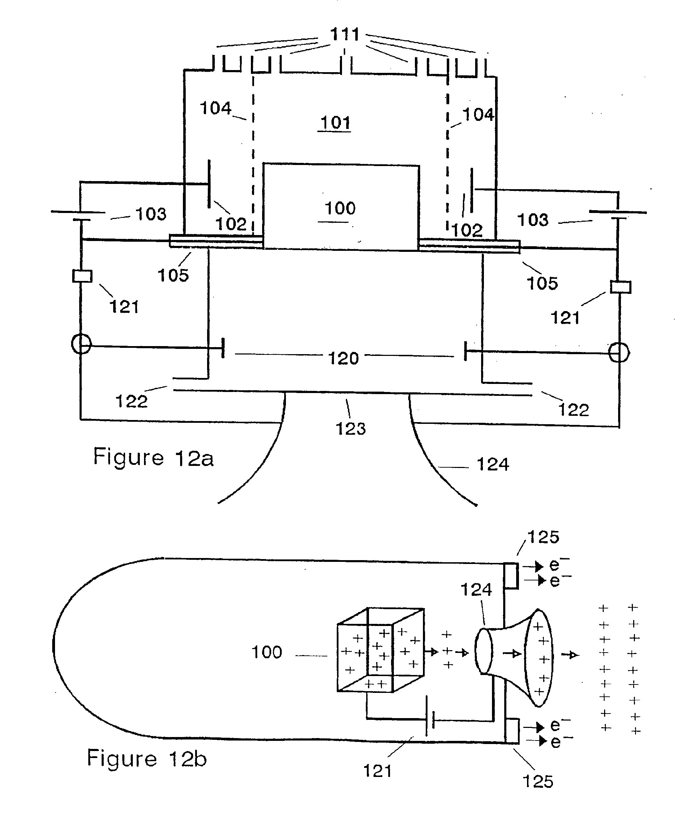

The storage of plasma solid can be a source of energy for jet propulsion. One of the better propellant used to propel rockets is a mix of liquid hydrogen and oxygen. Liquid hydrogen has a density of 4 10$^{22}$ hydrogen atoms/cm$^3$, and produces an energy of 250 kilojoule/mole of H$_2$. With a plasma solid at a concentration of 4 10$^{23}$ protons/cm$^3$ which produces an energy of 3.25 10$^3$ kilojoule/mole of H$_2$, the energy stored is a hundred time larger than in liquid hydrogen. The plasma solid can either be used classically by burning hydrogen with oxygen for jet propulsion, or by using only the energy of recombination (2 H$^+$ +e$^-$ -> H$_2$) which would suppress the need for oxygen. But the storage of plasma solid is also a source of matter and electric charge. If the protons depart the cathode under the form of charged particles, they can be accelerated and thus give momentum to the rocket. In this case, the loading of plasma solid follows the same principle as the one described in the previous paragraph. The cathode is included between two compartments (Figure 12).

The first compartment is the same as the one described in Figure 10 a. It has the same parts as the one described in the previous paragraphs. The first compartment allows the continuous loading of plasma, and the retention of the plasma inside the electrode through the induction of a state of vibration.

The second compartment has two essential functions:

- the first function is to keep the plasma inside cathode (100) when there is no use for the plasma. To accomplish this function, electrodes (120) has a positive potential when compared to cathode (100). An ionic solution is used to fill the second compartment so as to control the flow of all particles, and prevent, thanks to the polarity of power source 121, the exit of the plasma.
- the second function is to propel the rocket by allowing the protons to leave cathode (100). The ionic solution filling the second compartment is removed with a pump through cavity (122) at the rear of the rocket. Door (123) is opened to establish a contact between the cathode and the vacuum outside the rocket. A high voltage is applied between cathode (100) and exhaust nozzle (124) (positive potential to cathode (100) and negative potential to exhaust nozzle (124) ). The polarity difference compel the protons to depart cathode (100). Thanks to the high voltage, the protons are then expelled at very high speeds, thus propelling the rocket. The flow of proton can be controlled both by adjusting the voltage and by adjusting the surface of cathode (100) in the second compartment.

To regain control of the plasma solid mechanism, door (123) can be closed and the ionic solution can be reintroduced in the second compartment. The loading polarity is then reestablished. During the emission of H D T$^+$ at the rear of the rocket, a separate beam of electrons (125) is ejected to enable the recombination to take place behind the vehicle and prevent the rocket from becoming electrically charged. Such propulsion is interesting because it provides high specific impulse and therefore low propellant consumption. It is reusable, highly efficient, light weight and present very low maintenance cost. To increase the efficiency, the plasma solid can be created using deuterons.

### G-3) Creation of a Very Large Intensity

The plasma solid also represents a high density storage of electrical charges. One cubic decimeter of plasma solid at the concentration of $10^{23}$ H$^+$.cm$^{-3}$ contains an electrical charge of $10^7$ coulombs in electrons. It is equivalent to ten times the charge contained in a capacitor of one farad charged under a potential of $10^6$ Volt. The opposite charges of the plasma solid can be separated easily by changing the potential of the cathode. This plasma can thus be the source of a very high intensity current in an isolated vehicle such as a car, train, plane, etc... Figure 11 presents a possible use of this application in a vehicle. When the ionic solution is completely emptied from the second compartment, electrode 106 connected to power source 109 allows the exit of the protons from cathode 100. The flow of electrons which passes through power source 109 is equivalent to a high intensity current. The large volume of hydrogen formed on electrode 106 can be burned to feed the turbogenerator which furnishes the electrical energy used by power source 109. Thanks to this energy, it is possible to maintain a current of large amplitude which can be used to create a magnetic field of large intensity. This field can be used to move or stop a vehicle, or for magnetic levitation, which eliminates the friction of the vehicle with the ground.

### G-4) Tritium Storage

The plasma solid can be used to store tritium which in gaseous form occupies a large volume.

### H) Plasma Solid Fusion

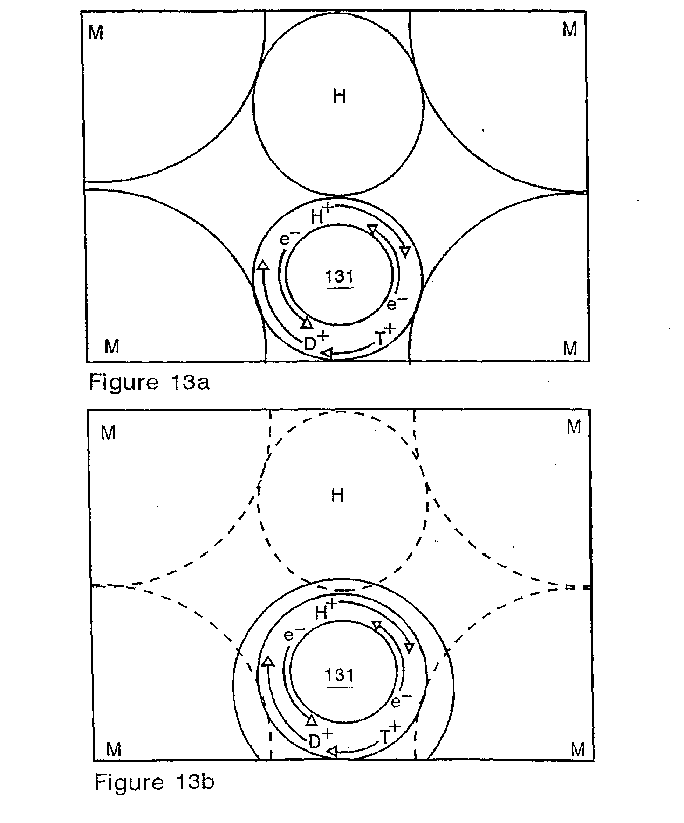

One of the mechanisms of plasma solid fusion occurs at the level of the plasma crown. Figure 13a and 13b present, in the diagonal section of the cube, the plasma crown or nanotokamak as it exists inside the elementary plasma cell. Each vertex is occupied by a metallic atom M. Between the eight atoms of the cubes, inside the free available volume, an hydrogen atom is bound to the metallic structure. The plasma crown 131 occupies the remnant of this volume. Figure 13b shows the plasma surrounded by the deformed orbitals of the four metallic atoms and of the bound hydrogen atom. For this application, all the parameters already discussed to create plasma solid remain valid. But the fusion reactions inside the cathode depend on the composition of the plasma solid. To produce the mechanism of plasma solid fusion, the ionic solution must contain H$^+$, D$^+$, or T$^+$, or a mixture of two or three of these isotopes. The choice of the reaction will ultimately determine the composition of the solution. Since the penetration of the isotopes inside the electrode will be determined by the respective weight of the isotopes, the composition of the plasma inside the electrode will be different from the composition of the solution. The lighter the isotope, the more easily it will penetrate the electrode. If the experiment entails the loading of a mixture of isotopes, the process can be divided into two steps: the heavier isotopes are used first, followed in a second time by the protons whose lesser weight make them easier to load. In this very high density plasma solid, these H D T$^+$ can react together in two ways to produce fusion reactions. As seen in the previous paragraph, the radius of the spherical plasma crown changes constantly because of the vibrations applied to the plasma. During a compression vibration, the radius of the spherical crown, and the outer surface where the plasma is most likely to be found diminish. If the cell was filled before the increase of the vibration (maximum number of pair proton-electron), the larger compression reduces the outer surface of the spherical crown and causes it to shed one or several pair of proton-electron which leave the cell to enter plasma crowns located in other plasma cells. In this situation, two cases appear. In the first case, the " plasma crowns " in the cells surrounding the compressed crown are full, the spherical crown can not shed the excess plasma. An electrical imbalance appears inside the crown. The two electrical . centers shift until they occupy different positions. An electrical dipole appears. The dipole moment depends of the total negative and positive electrical charges and of the distance between the two electrical centers. If the imbalance is sufficiently important, the dipole moment can react so violently against the metallic surroundings as to disrupt the lattice of the surrounding metal. This phenomenon has been recorded in acidic solution (pH <1), if the current-density maintained is too long at too strong an intensity ($I > 1$ A cm$^{-2}$). In these conditions, the plasma concentration becomes too important. Since the plasma can not escape inside the cathode and the protons continue entering the electrode, the surface of the metal breaks apart (see Schuldiner experiments). In the second case, if the surrounding spherical plasma crowns are not completely filled; the excess plasma from the compressed crown, leaves and enters the other spherical crowns. The transfer of plasma occurs through a tridimensional network of channels located between plasma cells. In the case of a cubic plasma cell, the transfer channels are located on each of the six sides of the spherical crown. These channels cross the plane of a cubic face near the center of the square, where it is easier for the electric charges to pass. These channels have the shape of an hour glass: they are larger near the plasma crowns and narrower at the crossing of the cubic face (bottleneck). Because of the vibrations, there is a continuous exchange of plasma between the plasma crowns through the tridimensional channels. A plasma crown submitted to a compression wave loses plasma. A plasma crown in expansion is available to receive plasma. When the amplitude of the vibration is large, the transfer occurs very rapidly. The protons, deuterons or tritons, escorted or not by an electron, can collide with another proton, deuteron or triton in two situations:

- If two plasma crowns send plasma simultaneously to each other through the same channel, there is a great probability that the protons, deuterons, or tritons will collide at the level of the bottleneck. With the accumulation of energy. caused by the stationary waves, the H D T$^+$ can be evicted with an energy of several 10 keV, an energy sufficient to force the H D T$^+$ to fusion with each other.
- When a H D T$^+$ is sent by a plasma crown toward another plasma crown, nothing slows down its speed until its arrival in the other crown. As seen previously, the electrical field is nil inside and outside the plasma crown because of the electrical neutrality of the plasma and Gauss' law. In this situation, the " plasma crown " is electrically neutral. A H D T$^+$ moving through a transfer channel will be able to approach the plasma crown without being subjected to any force from the plasma crown. Because of the properties of the crown, the incoming H D T$^+$ can get very close to any H D T$^+$ of the crown without impediment. When the two H D T$^+$ enter the field of nuclear force of the other, they attract one another and fusion. If the H D T$^+$ does not meet another H D T$^+$ in the first plasma crown, it crosses it without perturbation, and goes on to the next and so on, until it meets another H D T$^+$ and fusion. The same phenomenon occurs for the electrons. They can approach any H D T$^+$ undisturbed and, if they have enough energy, produce neutrons which can then react with another proton to form deuterons, or with deuterons to form tritons. When a plasma crown is compressed, a part of the plasma must be shed so that the plasma crown can retain its electrical balance. The excess plasma transferred can be composed of individual electrical charges emitted in different directions, or of a pair electron-H D T$^+$ emitted together. Because of the electrical neutrality of the receiving plasma crown, it is possible to obtain a reaction of nuclear fusion between a H D T$^+$ and a H D T$^+$-electron pair. Because of the electrical neutrality of the plasma crown, the speed of the H D T$^+$ needs not be great in order to achieve the reaction of fusion. This particular type of nuclear fusion reaction is very soft. Several kind of reaction are possible:

H on H        D on D        T on T
H on D        D on T
H on T

The plasma solid fusion can work with natural or light water. While all these reactions are possible, some are more interesting when it comes to the production of energy. The composition of the ionic solution will ultimately determine what type of thermonuclear reactions can be realized:

$$^1H + {}^2H \rightarrow {}^3He + \text{gamma} + 5.5 \text{ MeV}$$

$$^2H + {}^2H \rightarrow {}^3He + n + 3.3 \text{ MeV}$$

$$^2H + {}^2H \rightarrow {}^3H + {}^1H + 4 \text{ MeV}$$

$$^2H + {}^2H \rightarrow {}^4He + \text{gamma} + 23.8 \text{ MeV}$$

$$^2H + {}^3H \rightarrow {}^4He + n + 17.6 \text{ MeV}$$

$$^{2}H + {}^{3}H \rightarrow {}^{5}He + gamma + 16.7 \text{ MeV}$$

The heat produced by plasma solid fusion can be used directly for domestic purposes such as heating, or for more arcane use such as sea water desalinization. By using a turbogenerator, the heat can also be used to produce electricity. As seen previously in F-2), F-3) and F-5), some alloys can allow the creation of plasma crowns of $He^{2+}$, $B^{5+}$, $Be^{4+}$, $Li^{3+}$, H D $T^{+}$ or plasma crowns containing any mix of the preceding. With these plasma crowns, some fusion reaction can also be produced:

$$^{2}H + {}^{3}He \rightarrow {}^{4}He + {}^{1}H + 18.4 \text{ MeV}$$

$$^{2}H + {}^{4}He \rightarrow {}^{6}Li + gamma + 1.5 \text{ MeV}$$

$$^{2}H + {}^{6}Li \rightarrow 2\ {}^{4}He + 22.4 \text{ MeV}$$

$$^{2}H + {}^{6}Li \rightarrow {}^{7}Li + {}^{1}H + 5 \text{ MeV}$$

$$^{2}H + {}^{6}Li \rightarrow {}^{7}Be + n + 3.4 \text{ MeV}$$

$$^{2}H + {}^{7}Li \rightarrow 2\ {}^{4}He + n + 15.1 \text{ MeV}$$

## I By-Products and Transmutations

### I-1) Byproducts-Isotopes

The reaction of plasma solid fusion produces byproducts, including particles alpha, gamma, and neutrons. The plasma solid fusion can also be a source of tritium. Two deuterons react inside the cathode by plasma solid fusion D (d,p) T and produce one triton. Inside the layer the triton can react electrochemically with a proton, a deuteron or another triton to form molecular hydrogen (HT, DT, or TT) which then departs the electrode. The tritium can thus be recuperated, by collecting the hydrogen,gases, for other utilization, or reinjected in the solution. The tritium produced during this first reaction react with a deuteron to produce:

$$^{2}H + {}^{3}H \rightarrow {}^{4}He + n + 17.6 \text{ MeV}$$

The neutrons can be produced in other plasma solid reactions. These neutrons then react with $Li^{+}$ ions inside the ionic solution to produce:

$$^{6}LI + n \rightarrow {}^{3}H + {}^{4}He + 4.96 \text{ MeV}$$

The neutrons can also react with the metallic nuclei to produce isotopes of the atoms of the cathode.

### I-2) Transmutation

If the amplitude of the pulse is vastly increased, the plasma particles will not only interact among each other but also with the nuclei of the metallic atoms of the cathode. If two H D $T^{+}$ come through opposite sides of a transfer channel, there is a large probability that they will collide at the bottleneck. After the collision, the direction of the two H D $T^{+}$ will have been altered considerably. Likewise, inside the plasma crown, the magnetic field is not nil. When a H D $T^{+}$ crosses a plasma crown, its direction can be affected by the magnetic field inside the crown. If the H D $T^{+}$ then collides with enough speed with one of the metallic nucleus, it can fusion with the metal atom and provoke a transmutation. If there is no stripping during the fusion reaction, the interaction between the three different isotopes and a metallic atom M can have three different outcomes:

$$_lM^y + {_1}H^1 -> {_{x+1}}M^{y+1}$$

$$_lM^y + {_1}D^2 -> {_{x+1}}M^{y+2}$$

$$_lM^y + {_1}T^3 -> {_{x+1}}M^{y+3}$$

Since it is possible to use almost all the metallic elements to create an alloy with the resonant cavity of about 2 Å$^3$ required to create the plasma crowns, this transmutation method can be applied to numerous elements. Among other applications, it can be used to convert radioactive elements into stable elements. It is easy to create alloys respecting the resonance conditions with the following radioactive elements: $^{90}$Sr, $^{55}$Fe, $^{59}$Ni, $^{94}$Nb, $^{99}$Tc, $^{14}$C. If large vibrations are transmitted to the cathode, the following transmutations become possible:

$$^{55}Fe + {_1}H^1 -> {^{56}}Co \text{ (78.8 days)} -> {^{56}}Fe_{stable} + beta^+$$

$$^{59}Ni + {_1}H^1 -> {^{60}}Cu -> {^{60}}Ni_{stable} + beta^+$$

$$^{94}Nb + {_1}H^1 -> {^{95}}Mo_{stable}$$

$$^{99}Tc + {_1}H^2 -> {^{101}}Ru_{stable}$$

$$^{90}Sr + {_1}H^1 -> {^{91}}Y \text{(57 days)} -> {^{91}}Zr_{stable} + beta^-$$

This method of transmutation can also be used to create scarce elements which have a specific value. For all these elements, the structure of the alloy only suffers minor modification after the transmutation since the elements created are of the same size as the elements they replaced. This method is interesting because the concentration of the plasma solid is high ($10^{23}$ to $10^{24}$ H D T$^+$.cm$^{-3}$). By comparison, in a powerful research reactor, only $10^{15}$ neutrons pass through a surface area of one square centimeter every second. Primarily, the method can be used to produce energy. The creation of the rare element or the transmutation. of radioactive elements will occur as a byproduct of the reaction inside the cathode. The alloy of the cathode will thus be created to fulfill these two objectives.

### I-3) Energy Wave

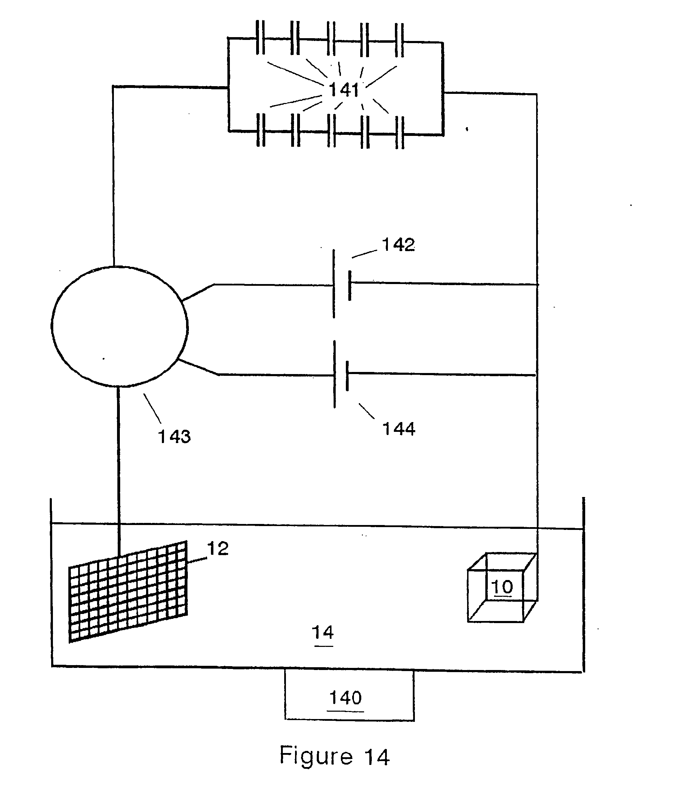

The objective is to send, instantaneously, a large amount of protons inside a cathode already loaded with plasma solid (concentration of $10^{23}$ to $10^{24}$ H D T$^+$ per cm$^3$). This can be realized by applying a high voltage to the solution. However, since the resistance of the bath is too low (1 ohm), the high voltage can only be applied by using the discharge of a series of capacitors (Figure 14). To allow the energy wave to concentrate at the center of the cathode, cathode 10 will preferably be of spherical or cylindrical shape. The size of the cathode will depend of the desired effect. The concentric shape of the cathode allows a very large compression of the plasma at the center of the cathode. Anode 12 is a platinum screen, one square decimeter or more in area, designed to avoid the creation of an upper limit to the amount of current that can pass through the anode. Solution 14 can be a mixture of protons and deuterons (DCl + HCl or $D_2SO_4$+ $H_2SO_4$), or a pure solution of deuterons. These solutions are very acid and have a concentration of $10^{21}$ H D T$^+$.cm$^{-3}$. Power source 144 allows the creation of plasma solid. The discharge lasts about one second. To avoid the problem of diffusion at the cathode, the solution should be agitated [ 140] in the bath at a high speed. The serial and parallel combination of the capacitors 141, allows to obtain a capacity of approximately one Farad. These capacitors can then be charged under a 1000 volts voltage 142. The capacitors can accumulate an electric charge of a thousand Coulombs or the equivalent of 6 $10^{21}$ electrons and an energy of 5 $10^5$ Joules. When the capacitors are connected by 143, they discharge in the bath. The energy is divided entirely between the ions of the solution. The 6 $10^{21}$ protons which enter the cathode bring with them an energy of 250 Joules. If the cathode, one cubic centimeter in volume, has been loaded until a concentration of 6 $10^{23}$ protons $cm^{-3}$ was reached, the quantity of protons which can enter in one second will only represent about 1% of the total number of protons already inside. This energy driven compression of the plasma solid can result in some of the following reactions (or others):

H (D, He) gamma (5.4 MeV)

D (D, He) n (2.45 MeV)

D (D, T) H (3.02 MeV)

If the plasma is only composed of deuteron, it is possible to create a large impulse of neutrons. The effect can be improved and augmented by the concentric shape of the cathode. The energy entering the cathode penetrates a layer 1 $cm^2$ in surface and some microns deep. This energy density is very large and melts parts of the metal which make up the cathode. The method can be used to realize a thermal process of the surface of the cathode. This large energy wave method can be used with other ions in the ionic solution or in gaseous plasma. Numerous ions have a radius smaller than 1 Å ($Li^+$, $Be^{2+}$, $Mg^{2+}$, $Na^+$, $Ti^{2+}$, $Cr^{3+}$, $Mn^{2+}$, $Fe^{3+}$, $Ni^{2+}$, $Cu^{2+}$, $Zn^{2+}$, etc...). In aqueous solutions, these ions are solvated by several molecules of water. When high voltage is applied, these ions lose the molecules of water, and are precipitated violently on the cathode. At these speeds, the layer of plasma inside the cathode acts as a wall. These ions collide with the H D $T^+$ of the plasma at very high speeds, and produce different kind of nuclear reactions. For example, the ions $Li^+$ can react:

$$^2H + {}^6Li \rightarrow 2\,{}^4He + 22.4 \text{ MeV}$$

$$^2H + {}^6Li \rightarrow {}^7Li + {}^1H + 5 \text{ MeV}$$

$$^2H + {}^6Li \rightarrow {}^7Be + n + 3.4 \text{ MeV}$$

$$^2H + {}^7Li \rightarrow 2\,{}^4He + n + 15.1 \text{ MeV}$$

These nuclear reactions, depending of the ions and hydrogen isotopes used, can produce energy, radioactive isotopes, particles, etc...

### I-4) Target

The plasma solid can be used as a target inside an accelerator. The plasma inside the cathode represent a wall for the ions accelerated toward this target. Many nuclear reactions are possible. It can also serve as a target for a laser to provoke fusion reactions inside the cathode.

[1] R. Clamroth and C.A. Knorr, Z.Electrochem., 57, 399, 1953.

[2] J.P. Hoare and S. Schuldiner, J. Electrochem. Soc, 102, 5 485, 1955.

### Claims

1. A method of creating a stable plasma inside a solid, comprising:

providing a cathode of a solid material with a lattice of such nature that it will allow the creation of stable plasma inside, the solid material comprising a metal or a metal alloy at least one of the components of which has an affinity for hydrogen or an apparent atomic volume of between 13.8 $Å^3$ and 16.4 $Å^3$ and the lattice including elementary cells with a free available volume of between 1.75 $Å^3$ and 2.5 $Å^3$, providing a source of particles, wherein the particles are provided in the form of an ionic solution having a pH of less than 0.4, a plasma gas, a hydrogen gas, or a molten salt containing the particles, and causing the particle to enter the lattice and become a stable plasma inside by imparting energy to the particles by energizing the cathode at a voltage such that the current density is greater than 0.1 $A/cm^2$ and causing the solid material to vibrate at its, or one of its, resonant frequencies.

2. The method as claimed in claim 1 wherein the step of providing the cathode comprises providing a cathode of palladium.

3. The method as claimed in any proceeding claim wherein the particles are $H^+$, $D^+$. $T^+$ $He^+$. $He^{2+}$. $Li^+$. $Li^{2+}$. $Li^{3+}$. $Be^{2+}$, or $Be^{3+}$.

4. The method as claimed in any proceeding claim wherein the cathode has a smooth surface free from cracks, pits and ruptures.

5. The method as claimed in any of the proceeding claims wherein the cathode has a passive metallic core surrounded by an active metallic layer at a depth between 3000 Å to 5000 Å, wherein the lattice is located in said active metallic layer.

6. The method as claimed in any of the proceeding claims wherein the solid material is caused to vibrate at its, or one of its, resonant frequencies by applying periodical impulses at constant current density to the cathode or by mechanical means.

7. The method as claimed in any of the proceeding claims further comprising transferring of the stable plasma in the solid lattice to a second solid material containing a lattice, said transfer comprising:

   providing a second solid material containing a lattice, the second solid material comprising a metal or a metal alloy at least one of the components of which has an affinity for hydrogen or an apparent atomic volume of between 13.8 $Å^3$ and 16.4 $Å^3$ and the lattice including elementary cells with a free available volume of between 1.75 $Å^3$ and 2.5 $Å^3$,
   placing a face of the stable plasma containing solid material contiguous with the face of the second solid material;
   allowing the stable plasma to move to the second solid material by causing both solid materials to vibrate at the same resonant frequency, and
   removing the stable plasma containing second solid material.

8. The method as claimed in any of the proceeding claims including providing the solid material having a lattice containing a plurality of first and second cavities, the first cavities being of such size that they will allow the formation and retention of stable plasma inside, the second cavities being of such size that they will allow the production of energy and hydrogen molecules inside, causing particle to enter said lattice to produce energy, hydrogen molecules and the stable plasma, and pulsing the entry of said particles to cause the solid material to vibrate at one of its resonate frequencies.

9. The method as claimed in any of the proceeding claims further comprising the step of using the stable plasma by causing the plasma to produce energy, molecules, charged particles, or mixtures thereof by changing the current density or the resonant frequency.

10. The method as claimed in claim 10 wherein the particles are protons and both energy and hydrogen molecules are produced, and further comprising the step of collecting the produced hydrogen.

11. The method as claimed in any of the proceeding claims including providing the solid material having a second lattice, the second lattice containing cavities of such size they will allow the creation of energy and hydrogen molecules inside thereof, wherein the particles are protons that are caused to enter said second lattice and react with electrons therein to produce energy and hydrogen molecules.

12. The method as claimed in any of claims 1 to 6 wherein the particles are a first group of particles and the method further comprises causing a second group of particles to enter said lattice with high energy, fuse with at least some of the particles of the first group and produce a third, highly concentrated, group of particles other than those which entered the lattice.

13. An apparatus for creating a stable plasma inside a solid, comprising:

   a cathode of a solid material with a lattice of such nature that it will allow the creation of stable plasma inside, the solid material comprising a metal or a metal alloy at least one of the components of which has an affinity for hydrogen or an apparent atomic volume of between 13.8 $Å^3$ and 16.4 $Å^3$ and the lattice including elementary cells with a free available volume of between 1.75 $Å^3$ and 2.5 $Å^3$,
   a source of particles, wherein the particles are provided in the form of an ionic solution having a pH of less than 0.4, a plasma gas, a hydrogen gas, or a molten salt containing the particles, and
means for causing the particle to enter the lattice and become a stable plasma inside by imparting energy to the particles by energizing the cathode at a voltage such that the current density is greater than 0.1 Å/cm$^2$ and causing the solid material to vibrate at its, or one of its, resonant frequencies.

14. The apparatus as claimed in claim 13 wherein the cathode is palladium.

15. The apparatus as claimed in any of claims 13 or 14 wherein the particles are H$^+$, D$^+$. T$^+$ He$^+$. He$^{2+}$. Li$^+$. Li$^{2+}$ . Li$^{3+}$. Be$^{2+}$, or Be$^{3+}$.

16. The apparatus as claimed in any of claims 13 to 15 wherein the cathode has a smooth surface free from cracks, pits and ruptures.

17. The apparatus as claimed in any of claims 13 to 16 wherein the cathode has a passive metallic core surrounded by an active metallic layer at a depth between 3000 Å to 5000 Å and wherein the lattice is located in said active metallic layer.

18. The apparatus as claimed in any of claims 13 to 17 further comprising means for causing the solid material to vibrate at its, or one of its, resonant frequencies by applying periodical impulses at constant current-density to the cathode or by mechanical means.

19. The apparatus as claimed in any of claims 13 to 18 wherein the solid material comprises a lattice containing a plurality of first and second cavities, the first cavities being of such size that they will allow the formation and retention of stable plasma inside, the second cavities being of such size that they will allow the production of energy and hydrogen molecules inside, means for causing particle to enter said lattice to produce energy, hydrogen molecules and the stable plasma, and means for pulsing the entry of said particles to cause the solid material to vibrate at one of its resonate frequencies.

20. The apparatus as claimed in any of claims 13 to 19 further comprising means for transferring the stable plasma in the solid lattice to a second solid material containing a lattice, said transfer means comprising:

    a second solid material containing a lattice, the second solid material comprising a metal or a metal alloy at least one of the components of which has an affinity for hydrogen or an apparent atomic volume of between 13.8 Å$^3$ and 16.4 Å$^3$ and the lattice including elementary cells with a free available volume of between 1.75 Å$^3$ and 2.5 Å$^3$,
    means for placing a face of the stable plasma containing solid material contiguous with the face of the second solid material;
    means for causing both solid materials to vibrate at the same resonant frequency thus allowing the stable plasma to move to the second solid material, and
    means for removing the stable plasma containing second solid material.

21. The apparatus as claimed in any of claims 13 to 20 further comprising means to release the plasma as energy, molecules, charged particles or mixtures thereof by changing the current density or the resonant frequency of the solid material.

22. The apparatus as claimed in any of claims 13 to 21 wherein the solid material further comprises a second lattice containing cavities of such size they will allow the creation of energy and hydrogen molecules inside thereof, wherein the particles are protons that are caused to enter said second lattice and react with electrons therein to produce energy and hydrogen molecules.

23. The apparatus as claimed in any of claims 13 to 19 wherein the particles are a first group of particles and the apparatus further comprises means for causing a second group of particles to enter said lattice with high energy, fuse with at least some of the particles of the first group and produce a third, highly concentrated, group of particles other than those which entered the lattice, and means for using said third, highly concentrated, group of particles.

Figure 1

Figure 2

Figure 3

Figure 4

Figure 5b

Figure 5a

Pd                                    Pd

Pd                              Pd

Pd

                    60

Pd                Pd          Figure 6a

Pd                                    Pd

Figure 6b

Pd

                          61

Pd                        Pd

        H
            bound

Pd                        Pd

Figure 7a

Figure 7b

Figure 7c

Figure 8

Figure 9

Figure 10a

Figure 10b

Figure 11

Figure 12a

Figure 12b

Figure 13a

Figure 13b

Figure 14